# EUROPÄISCHE PATENTSCHRIFT

(11) **EP 4 122 646 B1**
(45) Veröffentlichungstag und Bekanntmachung des Hinweises auf die Patenterteilung: **29.04.2026**
(21) Anmeldenummer: 22185209.8
(22) Anmeldetag: 15.07.2022
(51) Int. Cl.: B25B 5/06, B23Q 1/00

(54) **SPANNVORRICHTUNG**
CLAMPING DEVICE
DISPOSITIF DE SERRAGE

(30) Priorität: 19.07.2021 DE 102021118545
(43) Veröffentlichungstag der Anmeldung: 25.01.2023
(73) Patentinhaber: Andreas Maier GmbH & Co. KG, 70734 Fellbach (DE)
(72) Erfinder: Kommode, Steffen, 73635 Rudersberg (DE); Fischer, Jessica, 71576 Burgstetten (DE); Dietterle, Martin, 73575 Leinzell (DE); Zimmermann, Rainer, 73732 Esslingen (DE); Trebes, Herbert, 73614 Schorndorf (DE)
(74) Vertreter: Hoeger, Stellrecht & Partner Patentanwälte mbB

(56) Entgegenhaltungen:
- WO-A1-2014/009201
- WO-A1-2020/249621
- CH-A2- 701 046
- DE-A1- 102018 009 226
- DE-A1- 102019 116 262
- DE-T2- 69 712 975

## Beschreibung

Die vorliegende Erfindung betrifft eine Spannvorrichtung zum Einspannen eines an einem Werkstück oder an einem Werkstückträger angeordneten Spannbolzens, wobei die Spannvorrichtung Verriegelungselemente, einen Kolben zum Bewegen der Verriegelungselemente zu einer Längsmittelachse der Spannvorrichtung hin und ein Gehäuseteil umfasst,
wobei in einem Spannzustand der Spannvorrichtung, in welchem ein Spannbolzen in der Spannvorrichtung verriegelt ist, jedes der Verriegelungselemente an dem Kolben, an dem Gehäuseteil und an dem Spannbolzen an jeweils einer Kontaktstelle anliegt.

Bei bekannten Spannvorrichtungen dieser Art sind die Verriegelungselemente als Verriegelungskugeln ausgebildet. Im Spannzustand der Spannvorrichtung liegen diese Verriegelungskugeln an dem Kolben, an dem Gehäuseteil und an dem Spannbolzen an jeweils einer punktförmigen Kontaktstelle an.

Hierdurch werden die Lasten zwischen dem Kolben, dem Gehäuseteil und dem Spannbolzen einerseits und den kugelförmigen Verriegelungselementen andererseits über eine sehr kleine Anlagefläche übertragen, so dass diese Elemente schon bei vergleichsweise geringen Einspannkräften einer sehr hohen lokalen Belastung durch mechanische Spannungen unterliegen.

Die WO 2014/009201 A1 offenbart eine Spannvorrichtung gemäß dem Oberbegriff von Anspruch 1, wobei die jeweilige Spannbolzen-Kontaktstelle, mit welcher jedes kugelförmige Verriegelungselement in dem Spannzustand der Spannvorrichtung an einer konischen Fläche des Spannbolzens anliegt, punktförmig ist.

Die DE 10 2019 116262 A1 offenbart eine Spannvorrichtung gemäß dem Oberbegriff von Anspruch 1, wobei die jeweilige Spannbolzen-Kontaktstelle, mit welcher jeweils ein Verriegelungselement in dem Spannzustand der Spannvorrichtung an einer konischen Fläche des Spannbolzens anliegt, punktförmig ist.

Die DE 10 2018 009226 A1 offenbart eine Spannvorrichtung gemäß dem Oberbegriff von Anspruch 1, wobei die jeweilige Spannbolzen-Kontaktstelle, mit welcher jeweils ein ringsegmentartiges Verriegelungselement in dem Spannzustand der Spannvorrichtung an einer konischen Fläche des Spannbolzens anliegt, vollflächig und somit flächenförmig ist.

Die CH 701 046 A2 offenbart eine Spannvorrichtung zum Einspannen eines Werkstückträgers, wobei die Spannvorrichtung Verriegelungselemente, einen Spanndorn zum Bewegen der Verriegelungselemente von einer Längsmittelachse der Spannvorrichtung weg und ein Gehäuseteil umfasst, wobei in einem Spannzustand der Spannvorrichtung, in welchem der Werkstückträger an der Spannvorrichtung verriegelt ist, jedes der Verriegelungselemente an dem Spanndorn, an dem Gehäuseteil und an dem Werkstückträger an jeweils einer Kontaktstelle anliegt, wobei die jeweilige Werkstückträger-Kontaktstelle, mit welcher jedes Verriegelungselement in dem Spannzustand an dem Werkstückträger anliegt, linienförmig ist.

Der vorliegenden Erfindung liegt die Aufgabe zugrunde, eine Spannvorrichtung der eingangs genannten Art zu schaffen, welche es ermöglicht, sehr hohe Spannkräfte zwischen dem Spannbolzen einerseits und den Verriegelungselementen der Spannvorrichtung andererseits zu übertragen, ohne diese Elemente durch hohe lokale mechanische Spannungen zu sehr zu belasten und dadurch deren Zuverlässigkeit und Haltbarkeit zu verringern.

Diese Aufgabe wird durch eine Spannvorrichtung nach Anspruch 1 gelöst.

Die linienförmige Ausbildung der Spannbolzen-Kontaktstelle bedeutet, dass die Spannbolzen-Kontaktstelle sich in einer Längsrichtung, welche vorzugsweise der Umfangsrichtung des Verriegelungselements bzw. eines aus den Verriegelungselementen gebildeten Verriegelungselementerings entspricht, über eine große Strecke s erstreckt, welche in der Größenordnung der Erstreckung des jeweiligen Verriegelungselements längs der Längsrichtung liegt, während die Ausdehnung der Spannbolzen-Kontaktstelle in einer zu der Längsrichtung senkrecht ausgerichteten Querrichtung im Verhältnis zu der Längserstreckung s der Spannbolzen-Kontaktstelle sehr klein ist.

Vorzugsweise ist die Ausdehnung der Spannbolzen-Kontaktstelle in der zu der Längsrichtung senkrecht ausgerichteten Querrichtung kleiner als ein Zehntel der Ausdehnung s der Spannbolzen-Kontaktstelle längs der Längsrichtung der Spannbolzen-Kontaktstelle.

Vorzugsweise ist der Krümmungsradius der Oberfläche des Verriegelungselements im Bereich der Spannbolzen-Kontaktstelle, in einer senkrecht auf der Umfangsrichtung des Verriegelungselements bzw. des Verriegelungselementerings stehenden Ebene, maximal 10 mm, besonders bevorzugt maximal 5 mm.

Dies führt zu einer ringförmigen Linienbelastung der Verriegelungselemente des Verriegelungselementerings durch den Spannbolzen bzw. zu einer ringförmigen Linienbelastung des Spannbolzens durch die Verriegelungselemente des Verriegelungselementerings der Spannvorrichtung.

Diese Linienbelastung, die über die linienförmige Spannbolzen-Kontaktstelle übertragen wird, ist aufgrund der linienförmigen Ausgestaltung der Spannbolzen-Kontaktstelle geringer als im Falle einer Punktbelastung an einer punktförmigen Spannbolzen-Kontaktstelle, wie sie beispielsweise auftreten würde, wenn die Verriegelungselemente der Spannvorrichtung als Verriegelungskugeln ausgebildet wären.

Vorzugsweise liegt die jeweilige Spannbolzen-Kontaktstelle in dem Spannzustand der Spannvorrichtung lastübertragend an dem Spannbolzen an.

Die Spannbolzen-Kontaktstelle befindet sich vorzugsweise an einer inneren Umfangsfläche des jeweiligen Verriegelungselements.

Bei einer besonderen Ausgestaltung der Erfindung ist vorgesehen, dass die jeweilige Kolben-Kontaktstelle, mit welcher jedes Verriegelungselement in dem Spannzustand an dem Kolben anliegt, linienförmig ist.

Die Kolben-Kontaktstelle befindet sich vorzugsweise an einer äußeren gekrümmten Umfangsfläche des betreffenden Verriegelungselements.

Die linienförmige Kolben-Kontaktstelle erstreckt sich längs ihrer Längsrichtung, welche vorzugsweise mit der Umfangsrichtung des Verriegelungselements bzw. des Verriegelungselementerings der Spannvorrichtung übereinstimmt, über eine Strecke s', welche in derselben Größenordnung liegt wie die Ausdehnung des betreffenden Verriegelungselements längs der Längsrichtung der Kolben-Kontaktstelle.

In der senkrecht zu der Längsrichtung ausgerichteten Querrichtung erstreckt sich die Kolben-Kontaktstelle hingegen nur über eine Strecke, welche sehr viel kleiner ist als die Erstreckung s' in der Längsrichtung der Kolben-Kontaktstelle.

Vorzugsweise ist die Ausdehnung der Kolben-Kontaktstelle in der Querrichtung kleiner als ein Zehntel der Ausdehnung der Kolben-Kontaktstelle in der Längsrichtung der Kolben-Kontaktstelle.

Die Oberfläche des Verriegelungselements weist vorzugsweise in der Ebene, die senkrecht auf der Umfangsrichtung des Verriegelungselements bzw. des Verriegelungselementerings steht, einen Krümmungsradius auf, welcher maximal 10 mm, besonders bevorzugt maximal 5 mm, beträgt.

Dies führt dazu, dass die Verriegelungselemente des Verriegelungselementerings im Spannzustand der Spannvorrichtung einer ringförmigen Linienbelastung durch den Kolben unterliegen und dass der Kolben im Spannzustand der Spannvorrichtung einer ringförmigen Linienbelastung durch die Verriegelungselemente des Verriegelungselementerings unterliegt.

Durch die linienförmige Ausbildung der Kolben-Kontaktstelle wird die jeweilige lokale mechanische Belastung des Kolbens durch die Verriegelungselemente bzw. die jeweilige lokale mechanische Belastung der Verriegelungselemente durch den Kolben im Vergleich zu der Punktbelastung reduziert, welcher der Kolben unterliegen würde, wenn die Verriegelungselemente als Verriegelungskugeln ausgebildet wären.

Alternativ zu einer linienförmigen Ausbildung der Kolben-Kontaktstelle kann vorgesehen sein, dass die jeweilige Kolben-Kontaktstelle, mit welcher jedes Verriegelungselement in dem Spannzustand an dem Kolben anliegt, flächenförmig ist.

In diesem Fall liegt vorzugsweise eine im Wesentlichen eben ausgebildete Kolben-Kontaktstelle im Spannzustand der Spannvorrichtung an einer ebenfalls im Wesentlichen eben ausgebildeten Verriegelungselement-Kontaktfläche des Kolbens an.

Durch eine flächenförmige Ausbildung der Kolben-Kontaktstelle wird die jeweilige lokale Belastung des Kolbens durch die Verriegelungselemente bzw. die jeweilige lokale Belastung der Verriegelungselemente durch den Kolben im Spannzustand der Spannvorrichtung im Vergleich zu einer Linienbelastung, welche im Fall einer linienförmig ausgebildeten Kolben-Kontaktstelle auftritt, noch weiter reduziert.

Ferner ist vorgesehen, dass die jeweilige Gehäuseteil-Kontaktstelle, mit welcher jedes Verriegelungselement im Spannzustand an dem Gehäuseteil anliegt, flächenförmig ist.

Dabei ist vorzugsweise vorgesehen, dass eine im Wesentlichen eben ausgebildete Gehäuseteil-Kontaktstelle im Spannzustand der Spannvorrichtung an einer vorzugsweise ebenfalls im Wesentlichen eben ausgebildeten Verriegelungselement-Kontaktfläche des Gehäuseteils anliegt.

Durch die Flächenförmigkeit der Gehäuseteil-Kontaktstelle wird die jeweilige lokale Belastung des Gehäuseteils durch die Verriegelungselemente bzw. die jeweilige lokale Belastung der Verriegelungselemente durch das Gehäuseteil im Spannzustand der Spannvorrichtung im Vergleich zu einer linienförmigen Belastung (im Falle einer linienförmigen Ausbildung der Gehäuseteil-Kontaktstelle) und im Vergleich zu der Punktbelastung reduziert, welcher das Gehäuseteil unterliegen würde, wenn die Verriegelungselemente als Verriegelungskugeln ausgebildet wären.

Bei einer bevorzugten Ausgestaltung der Erfindung ist vorgesehen, dass das Gehäuseteil, an welchem jedes Verriegelungselement im Spannzustand mit der jeweiligen Gehäuseteil-Kontaktstelle anliegt, ein Gehäusedeckel der Spannvorrichtung ist.

Ein solcher Gehäusedeckel weist vorzugsweise eine mittige Ausnehmung auf, durch welche ein Spannbolzen in eine Spannbolzenaufnahme der Spannvorrichtung einbringbar ist.

Bei einer bevorzugten Ausgestaltung der Erfindung ist vorgesehen, dass jedes der Verriegelungselemente als ein Torus-Segment ausgebildet ist.

Die Verriegelungselemente bilden zusammen einen Verriegelungselementering der Spannvorrichtung.

Vorzugsweise sind die Verriegelungselemente längs der Umfangsrichtung des Verriegelungselementerings in dem Freigabezustand der Spannvorrichtung voneinander beabstandet.

Im Spannzustand der Spannvorrichtung können die Verriegelungselemente des Verriegelungselementerings voneinander beabstandet sein oder mit ihren Stirnflächen aneinander anliegen.

Vorzugsweise sind die Verriegelungselemente im Spannzustand der Spannvorrichtung voneinander beabstandet, um Fertigungstoleranzen ausgleichen zu können und zu gewährleisten, dass der Spannbolzen auf jeden Fall mit der vollen Einspannkraft beaufschlagt wird.

Die Verriegelungselemente können einen längs einer Umfangsrichtung des Verriegelungselementerings im Wesentlichen konstanten Querschnitt aufweisen.

Bei einer besonderen Ausgestaltung der Erfindung ist vorgesehen, dass die Verriegelungselemente in einem Verriegelungselementeaufnahmeraum der Spannvorrichtung aufgenommen sind und längs einer Umfangsrichtung des Verriegelungselementeaufnahmeraums beweglich sind.

Der Verriegelungselementeaufnahmeraum der Spannvorrichtung ist vorzugsweise im Wesentlichen ringförmig ausgebildet.

Die Verriegelungselemente sind in dem Verriegelungselementeaufnahmeraum vorzugsweise frei längs der Umfangsrichtung des Verriegelungselementeaufnahmeraums beweglich.

Bei einer besonderen Ausgestaltung der Erfindung ist vorgesehen, dass jedes der Verriegelungselemente eine äußere Umfangsfläche aufweist, welche einen konischen Abschnitt umfasst.

In diesem Fall ist die Kolben-Kontaktstelle jedes Verriegelungselements vorzugsweise flächenförmig ausgebildet.

Der konische Abschnitt der äußeren Umfangsfläche des jeweiligen Verriegelungselements kann gegenüber der Längsmittelachse der Spannvorrichtung um einen Winkel α von weniger als 10°, insbesondere von weniger als 8°, besonders bevorzugt von weniger als 6°, geneigt sein.

Bei einer besonderen Ausgestaltung der Erfindung ist vorgesehen, dass ein Boden eines Verriegelungselementeaufnahmeraums der Spannvorrichtung einen Höcker aufweist, welcher eine Bewegung mindestens eines der Verriegelungselemente längs einer Radialrichtung der Längsmittelachse der Spannvorrichtung nach innen begrenzt.

Besonders günstig ist es, wenn der Höcker eine Bewegung aller Verriegelungselemente längs einer Radialrichtung der Längsmittelsachse der Spannvorrichtung nach innen begrenzt.

Der Höcker kann ringförmig geschlossen ausgebildet sein.

Bei einer besonderen Ausgestaltung der Erfindung ist vorgesehen, dass die Spannvorrichtung mindestens eine Verdrehsicherung umfasst, welche eine Bewegung mindestens eines der Verriegelungselemente längs einer Umfangsrichtung eines Verriegelungselementeaufnahmeraums der Spannvorrichtung begrenzt oder verhindert.

Eine solche Verdrehsicherung kann beispielsweise eine verriegelungselementseitige Ausnehmung an einem der Verriegelungselemente und/oder eine gehäuseteilseitige Ausnehmung an dem Gehäuseteil umfassen.

Vorzugsweise ist für jedes der Verriegelungselemente eine verriegelungselementseitige Ausnehmung und eine dem jeweiligen Verriegelungselement zugeordnete gehäuseteilseitige Ausnehmung an dem Gehäuseteil vorgesehen.

Die verriegelungselementseitige Ausnehmung und/oder die gehäuseteilseitige Ausnehmung sind vorzugsweise quer, insbesondere senkrecht, zu der Umfangsrichtung des Verriegelungselementeaufnahmeraums und/oder parallel zu einer Radialrichtung der Längsmittelachse der Spannvorrichtung ausgerichtet.

Ferner kann vorgesehen sein, dass die Verdrehsicherung ein mit einem der Verriegelungselemente und/oder mit dem Gehäuseteil in Eingriff stehendes Kopplungselement umfasst.

Ein solches Kopplungselement kann beispielsweise als ein Zylinderstift ausgebildet sein.

Vorzugsweise steht ein solches Kopplungselement sowohl mit einer verriegelungselementseitigen Ausnehmung an einem der Verriegelungselemente als auch mit einer gehäuseteilseitigen Ausnehmung an dem Gehäuseteil in Eingriff.

Das Kopplungselement kann relativ zu dem Gehäuseteil und/oder zu dem jeweils zugeordneten Verriegelungselement beweglich sein oder relativ zu dem Gehäuseteil und/oder relativ zu dem jeweils zugeordneten Verriegelungselement ortsfest angeordnet sein.

Alternativ oder ergänzend hierzu kann vorgesehen sein, dass die Verdrehsicherung einen an dem Gehäuseteil angeordneten Vorsprung umfasst.

Vorzugsweise ist für jedes der Verriegelungselemente ein solcher Vorsprung an dem Gehäuseteil vorgesehen.

Ein solcher Vorsprung kann insbesondere mit einer jeweils zugeordneten verriegelungselementseitigen Ausnehmung an einem der Verriegelungselemente in Eingriff stehen.

Bei einer besonderen Ausgestaltung der Spannvorrichtung ist ferner vorgesehen, dass die Spannvorrichtung eine Vorspanneinrichtung umfasst, welche die Verriegelungselemente in einer Radialrichtung der Längsmittelachse der Spannvorrichtung nach innen, das heißt zu der Längsmittelachse der Spannvorrichtung hin, elastisch vorspannt.

Eine solche Vorspanneinrichtung kann beispielsweise ein Federelement umfassen.

Ein solches Federelement kann insbesondere ringförmig geschlossen ausgebildet sein.

Ein solches Federelement kann aus einem federelastischen metallischen Material oder aus einem Elastomermaterial gebildet sein.

Das Federelement kann zumindest teilweise in Federelementaufnahmen angeordnet sein, welche an den Verriegelungselementen der Spannvorrichtung ausgebildet sind.

Durch die Vorspanneinrichtung werden die Verriegelungselemente elastisch in der Radialrichtung der Längsmittelsachse der Spannvorrichtung nach innen, in Richtung auf den Spannbolzen zu, vorgespannt.

Hierdurch werden die Verriegelungselemente auch im Freigabezustand der Spannvorrichtung in Richtung auf die Längsmittelachse zu nach innen gezogen.

Die Abstände zwischen den in der Umfangsrichtung des Verriegelungselementerings aufeinanderfolgenden Verriegelungselementen sind dadurch kleiner als ohne die Einwirkung der Vorspanneinrichtung. Hierdurch wird ein Eindringen von Schmutz in den Bereich zwischen den Verriegelungselementen des Verriegelungselementerings erschwert.

Ferner ist ein in die Spannbolzenaufnahme der Spannvorrichtung eingeführter Spannbolzen schon vor dem Einleiten eines Spannvorgangs durch Formschluss mit den Verriegelungselementen in der Spannbolzenaufnahme der Spannvorrichtung gehalten.

Beim Einführen des Spannbolzens in die Spannbolzenaufnahme muss die elastische Rückstellkraft der Vorspanneinrichtung überwunden werden, und nach Überwindung dieser elastischen Rückstellkraft kann der Spannbolzen hinter den Verriegelungselementen einrasten.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine perspektivische Darstellung einer Spannvorrichtung in Form eines Spannzylinders, der als ein Einsteckmodul ausgebildet ist, und eines Spannbolzens;
- Fig. 2: einen Längsschnitt durch die Spannvorrichtung und den Spannbolzen aus Fig. 1, wobei der Spannbolzen in eine Spannbolzenaufnahme der Spannvorrichtung eingreift, in einem Freigabezustand, in welchem der Spannbolzen aus der Spannbolzenaufnahme entnehmbar ist;
- Fig. 3: einen der Fig. 2 entsprechenden Längsschnitt durch die Spannvorrichtung und den Spannbolzen in einem Spannzustand der Spannvorrichtung, in welcher der Spannbolzen durch Verriegelungselemente in der Spannbolzenaufnahme der Spannvorrichtung zurückgehalten wird;
- Fig. 4: einen Längsschnitt durch die Spannvorrichtung aus den Fig. 1 bis 3, die in eine Spannvorrichtungsaufnahme eines Maschinentisches eingesetzt ist, und einen Spannbolzen, der an einem Werkstückträger angeordnet ist, wobei der Spannbolzen in eine Spannbolzenaufnahme der Spannvorrichtung eingreift, in einem Freigabezustand der Spannvorrichtung, in welchem der Spannbolzen aus der Spannbolzenaufnahme der Spannvorrichtung entnehmbar ist;
- Fig. 5: einen der Fig. 4 entsprechenden Längsschnitt durch die Spannvorrichtung, den Maschinentisch, den Spannbolzen und den Werkstückträger in einem Spannzustand der Spannvorrichtung, in welchem der Spannbolzen durch Verriegelungselemente in der Spannbolzenaufnahme zurückgehalten wird;
- Fig. 6: eine perspektivische Darstellung eines Verriegelungselementerings der Spannvorrichtung aus den Fig. 1 bis 5, im Freigabezustand der Spannvorrichtung;
- Fig. 7: eine der Fig. 6 entsprechende perspektivische Darstellung des Verriegelungselementerings der Spannvorrichtung, im Spannzustand der Spannvorrichtung;
- Fig. 8: eine Draufsicht von oben auf den Verriegelungselementering aus Fig. 6, im Freigabezustand der Spannvorrichtung;
- Fig. 9: eine der Fig. 8 entsprechende Draufsicht auf den Verriegelungselementering aus Fig. 7, im Spannzustand der Spannvorrichtung;
- Fig. 10: eine perspektivische Darstellung eines einzelnen Verriegelungselements der Spannvorrichtung aus den Fig. 1 bis 9;
- Fig. 11: einen Querschnitt durch eines der Verriegelungselemente des Verriegelungselementerings aus Fig. 8, längs der Linie 11-11 in Fig. 8;
- Fig. 12: einen Längsschnitt durch eine zweite Ausführungsform einer Spannvorrichtung und einen Spannbolzen, wobei der Spannbolzen in eine Spannbolzenaufnahme der Spannvorrichtung eingreift, in einem Freigabezustand, in welchem der Spannbolzen aus der Spannbolzenaufnahme entnehmbar ist;
- Fig. 13: einen der Fig. 12 entsprechenden Längsschnitt durch die Spannvorrichtung und den Spannbolzen in einem Spannzustand der Spannvorrichtung, in welchem der Spannbolzen durch Verriegelungselemente in der Spannbolzenaufnahme der Spannvorrichtung zurückgehalten wird;
- Fig. 14: einen Längsschnitt durch die Spannvorrichtung aus den Fig. 12 und 13, die in eine Spannvorrichtungsaufnahme eines Maschinentisches eingesetzt ist, und einen Spannbolzen, der an einem Werkstückträger angeordnet ist, wobei der Spannbolzen in eine Spannbolzenaufnahme der Spannvorrichtung eingreift, in einem Freigabezustand der Spannvorrichtung, in welchem der Spannbolzen aus der Spannbolzenaufnahme der Spannvorrichtung entnehmbar ist;
- Fig. 15: einen der Fig. 14 entsprechenden Längsschnitt durch die Spannvorrichtung, den Maschinentisch, den Spannbolzen und den Werkstückträger in einem Spannzustand der Spannvorrichtung, in welchem der Spannbolzen durch Verriegelungselemente in der Spannbolzenaufnahme zurückgehalten wird;
- Fig. 16: eine perspektivische Darstellung eines Verriegelungselementerings der Spannvorrichtung aus den Fig. 12 bis 15, im Freigabezustand der Spannvorrichtung;
- Fig. 17: eine der Fig. 16 entsprechende perspektivische Darstellung des Verriegelungselementerings der Spannvorrichtung, im Spannzustand der Spannvorrichtung;
- Fig. 18: eine perspektivische Darstellung eines einzelnen Verriegelungselements der Spannvorrichtung aus den Fig. 12 bis 17;
- Fig. 19: einen Querschnitt durch eines der Verriegelungselemente des Verriegelungselementerings aus Fig. 16;
- Fig. 20: einen Längsschnitt durch eine dritte Ausführungsform einer Spannvorrichtung und einen Spannbolzen, wobei der Spannbolzen in eine Spannbolzenaufnahme der Spannvorrichtung eingreift, in einem Freigabezustand, in welchem der Spannbolzen aus der Spannbolzenaufnahme entnehmbar ist;
- Fig. 21: einen der Fig. 20 entsprechenden Längsschnitt durch die Spannvorrichtung und den Spannbolzen in einem Spannzustand der Spannvorrichtung, in welchem der Spannbolzen durch Verriegelungselemente in der Spannbolzenaufnahme der Spannvorrichtung zurückgehalten wird;
- Fig. 22: einen Längsschnitt durch die Spannvorrichtung aus den Fig. 20 und 21, die in eine Spannvorrichtungsaufnahme eines Maschinentisches eingesetzt ist, und einen Spannbolzen, der an einem Werkstückträger angeordnet ist, wobei der Spannbolzen in eine Spannbolzenaufnahme der Spannvorrichtung eingreift, in einem Freigabezustand der Spannvorrichtung, in welchem der Spannbolzen aus der Spannbolzenaufnahme der Spannvorrichtung entnehmbar ist;
- Fig. 23: einen der Fig. 22 entsprechenden Längsschnitt durch die Spannvorrichtung, den Maschinentisch, den Spannbolzen und den Werkstückträger in einem Spannzustand der Spannvorrichtung, in welchem der Spannbolzen durch Verriegelungselemente in der Spannbolzenaufnahme zurückgehalten wird;
- Fig. 24: eine perspektivische Darstellung eines Verriegelungselementerings der Spannvorrichtung aus den Fig. 12 bis 15, im Freigabezustand der Spannvorrichtung;
- Fig. 25: eine der Fig. 24 entsprechende perspektivische Darstellung des Verriegelungselementerings der Spannvorrichtung, im Spannzustand der Spannvorrichtung;
- Fig. 26: eine perspektivische Darstellung eines einzelnen Verriegelungselements der Spannvorrichtung aus den Fig. 20 bis 25;
- Fig. 27: einen Querschnitt durch eines der Verriegelungselemente des Verriegelungselementerings aus Fig. 24;
- Fig. 28: einen Längsschnitt durch eine vierte Ausführungsform einer Spannvorrichtung und einen Spannbolzen, wobei der Spannbolzen in eine Spannbolzenaufnahme der Spannvorrichtung eingreift, in einem Freigabezustand, in welchem der Spannbolzen aus der Spannbolzenaufnahme entnehmbar ist;
- Fig. 29: einen der Fig. 28 entsprechenden Längsschnitt durch die Spannvorrichtung und den Spannbolzen in einem Spannzustand der Spannvorrichtung, in welchem der Spannbolzen durch Verriegelungselemente in der Spannbolzenaufnahme der Spannvorrichtung zurückgehalten wird;
- Fig. 30: einen Längsschnitt durch die Spannvorrichtung aus den Fig. 28 und 29, die in eine Spannvorrichtungsaufnahme eines Maschinentisches eingesetzt ist, und einen Spannbolzen, der an einem Werkstückträger angeordnet ist, wobei der Spannbolzen in eine Spannbolzenaufnahme der Spannvorrichtung eingreift, in einem Freigabezustand der Spannvorrichtung, in welchem der Spannbolzen aus der Spannbolzenaufnahme der Spannvorrichtung entnehmbar ist;
- Fig. 31: einen der Fig. 30 entsprechenden Längsschnitt durch die Spannvorrichtung, den Maschinentisch, den Spannbolzen und den Werkstückträger in einem Spannzustand der Spannvorrichtung, in welchem der Spannbolzen durch Verriegelungselemente in der Spannbolzenaufnahme zurückgehalten wird;
- Fig. 32: eine perspektivische Darstellung eines Verriegelungselementerings der Spannvorrichtung aus den Fig. 28 bis 31, im Freigabezustand der Spannvorrichtung;
- Fig. 33: eine der Fig. 32 entsprechende perspektivische Darstellung des Verriegelungselementerings der Spannvorrichtung, im Spannzustand der Spannvorrichtung;
- Fig. 34: eine perspektivische Darstellung eines einzelnen Verriegelungselements der Spannvorrichtung aus den Fig. 28 bis 33;
- Fig. 35: einen Querschnitt durch eines der Verriegelungselemente des Verriegelungselementerings aus Fig. 32;
- Fig. 36: einen Längsschnitt durch eine fünfte Ausführungsform einer Spannvorrichtung und einen Spannbolzen, wobei der Spannbolzen in eine Spannbolzenaufnahme der Spannvorrichtung eingreift, in einem Freigabezustand, in welchem der Spannbolzen aus der Spannbolzenaufnahme entnehmbar ist;
- Fig. 37: einen der Fig. 36 entsprechenden Längsschnitt durch die Spannvorrichtung und den Spannbolzen in einem Spannzustand der Spannvorrichtung, in welchem der Spannbolzen durch Verriegelungselemente in der Spannbolzenaufnahme der Spannvorrichtung zurückgehalten wird;
- Fig. 38: einen Längsschnitt durch die Spannvorrichtung aus den Fig. 36 und 37, die in eine Spannvorrichtungsaufnahme eines Maschinentisches eingesetzt ist, und einen Spannbolzen, der an einem Werkstückträger angeordnet ist, wobei der Spannbolzen in eine Spannbolzenaufnahme der Spannvorrichtung eingreift, in einem Freigabezustand der Spannvorrichtung, in welchem der Spannbolzen aus der Spannbolzenaufnahme der Spannvorrichtung entnehmbar ist;
- Fig. 39: einen der Fig. 38 entsprechenden Längsschnitt durch die Spannvorrichtung, den Maschinentisch, den Spannbolzen und den Werkstückträger in einem Spannzustand der Spannvorrichtung, in welchem der Spannbolzen durch Verriegelungselemente in der Spannbolzenaufnahme zurückgehalten wird;
- Fig. 40: eine perspektivische Darstellung eines Verriegelungselementerings der Spannvorrichtung aus den Fig. 36 bis 39, im Freigabezustand der Spannvorrichtung;
- Fig. 41: eine der Fig. 40 entsprechende perspektivische Darstellung des Verriegelungselementerings der Spannvorrichtung, im Spannzustand der Spannvorrichtung;
- Fig. 42: eine Draufsicht von oben auf den Verriegelungselementering aus Fig. 40, im Freigabezustand der Spannvorrichtung;
- Fig. 43: eine der Fig. 42 entsprechende Draufsicht von oben auf den Verriegelungselementering aus Fig. 41, im Spannzustand der Spannvorrichtung;
- Fig. 44: eine perspektivische Darstellung eines einzelnen Verriegelungselements der Spannvorrichtung aus den Fig. 36 bis 43;
- Fig. 45: einen Querschnitt durch eines der Verriegelungselemente des Verriegelungselementerings aus Fig. 42, längs der Linie 45-45 in Fig. 42;
- Fig. 46: einen Längsschnitt durch eine sechste Ausführungsform einer Spannvorrichtung und einen Spannbolzen, wobei der Spannbolzen in eine Spannbolzenaufnahme der Spannvorrichtung eingreift, in einem Freigabezustand, in welchem der Spannbolzen aus der Spannbolzenaufnahme entnehmbar ist;
- Fig. 47: einen der Fig. 46 entsprechenden Längsschnitt durch die Spannvorrichtung und den Spannbolzen in einem Spannzustand der Spannvorrichtung, in welchem der Spannbolzen durch Verriegelungselemente in der Spannbolzenaufnahme der Spannvorrichtung zurückgehalten wird;
- Fig. 48: einen Längsschnitt durch die Spannvorrichtung aus den Fig. 46 und 47, die in eine Spannvorrichtungsaufnahme eines Maschinentisches eingesetzt ist, und einen Spannbolzen, der an einem Werkstückträger angeordnet ist, wobei der Spannbolzen in eine Spannbolzenaufnahme der Spannvorrichtung eingreift, in einem Freigabezustand der Spannvorrichtung, in welchem der Spannbolzen aus der Spannbolzenaufnahme der Spannvorrichtung entnehmbar ist;
- Fig. 49: einen der Fig. 48 entsprechenden Längsschnitt durch die Spannvorrichtung, den Maschinentisch, den Spannbolzen und den Werkstückträger in einem Spannzustand der Spannvorrichtung, in welchem der Spannbolzen durch Verriegelungselemente in der Spannbolzenaufnahme zurückgehalten wird;
- Fig. 50: eine perspektivische Darstellung eines Verriegelungselementerings der Spannvorrichtung aus den Fig. 46 bis 49, im Freigabezustand der Spannvorrichtung;
- Fig. 51: eine der Fig. 50 entsprechende perspektivische Darstellung des Verriegelungselementerings der Spannvorrichtung, im Spannzustand der Spannvorrichtung;
- Fig. 52: eine Draufsicht von oben auf den Verriegelungselementering aus Fig. 50, im Freigabezustand der Spannvorrichtung;
- Fig. 53: eine der Fig. 52 entsprechende Draufsicht auf den Verriegelungselementering aus Fig. 51, im Spannzustand der Spannvorrichtung;
- Fig. 54: eine perspektivische Darstellung eines einzelnen Verriegelungselements der Spannvorrichtung aus den Fig. 46 bis 53;
- Fig. 55: einen Querschnitt durch eines der Verriegelungselemente des Verriegelungselementerings aus Fig. 52, längs der Linie 55-55 in Fig. 52.

Gleiche oder funktional äquivalente Elemente sind in allen Figuren mit denselben Bezugszeichen bezeichnet.

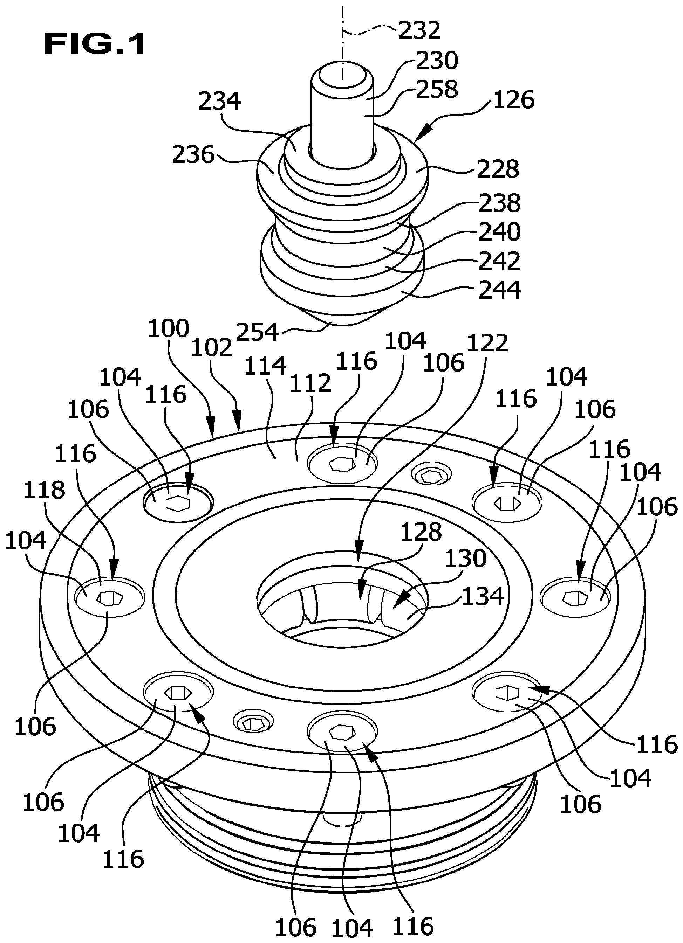

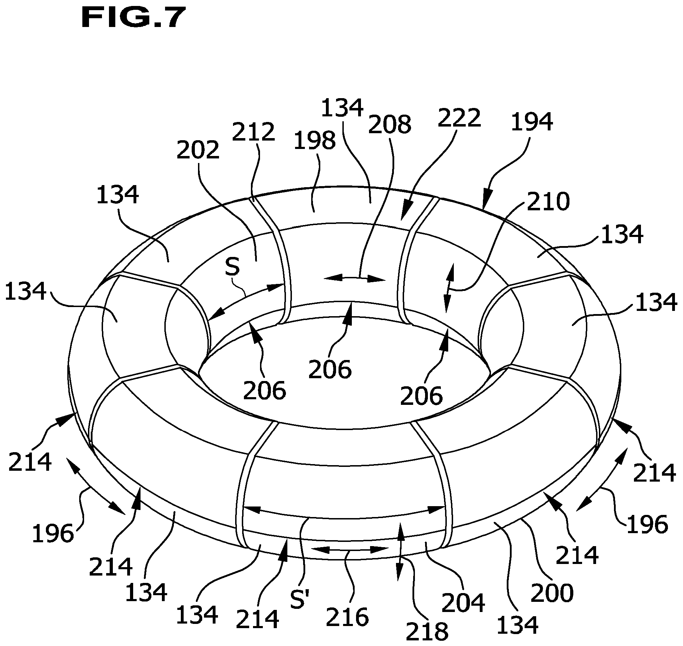

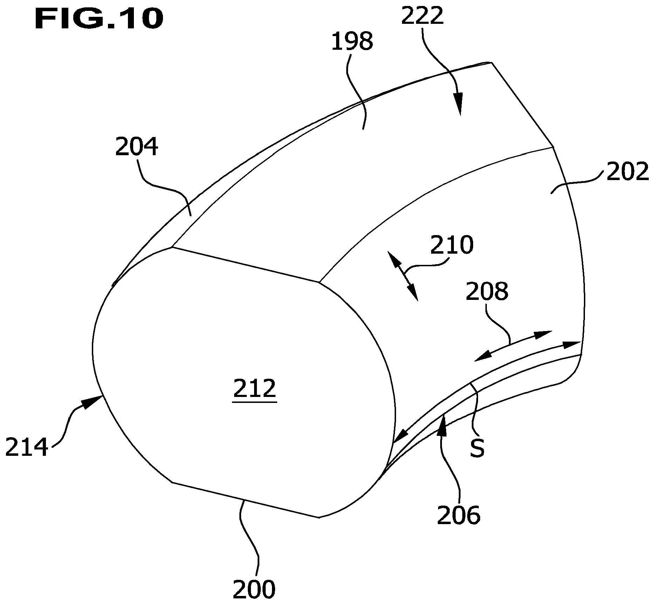

Eine in den Fig. 1 bis 11 dargestellte erste Ausführungsform einer als Ganzes mit 100 bezeichneten Spannvorrichtung ist als ein Schnellspannmodul 102 ausgebildet, welches mittels Befestigungsmitteln 104, beispielsweise Schrauben 106, an einer Spannvorrichtungsaufnahme 108 eines Maschinentisches 110 oder einer Aufspannplatte befestigbar ist (siehe die Fig. 1 bis 5).

Die Spannvorrichtung 100 umfasst ein Gehäuseteil 112, das vorzugsweise als ein Gehäusedeckel 114 ausgebildet ist.

Das Gehäuseteil 112 weist gestufte Durchtrittsöffnungen 116 auf, welche jeweils einen Kopf 118 und einen dem Kopf 118 zugewandten Teil des Schaftes 120 jeweils einer Schraube 106 aufnehmen.

Wie am besten aus Fig. 1 zu ersehen ist, sind die Durchtrittsöffnungen 116 vorzugsweise äquidistant längs des Umfangs des Gehäuseteils 112 verteilt.

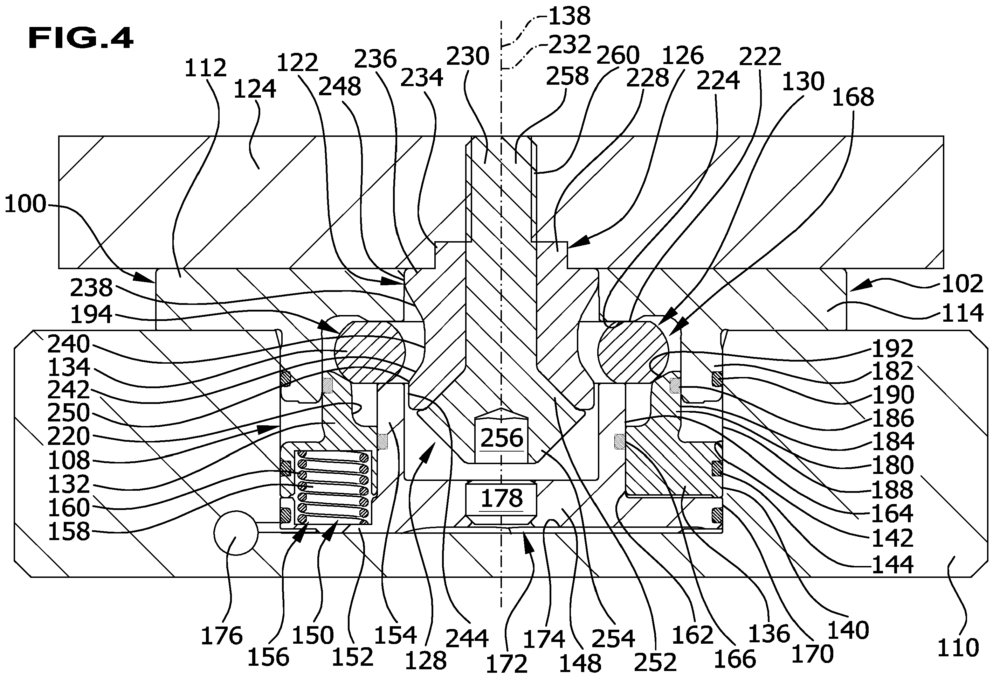

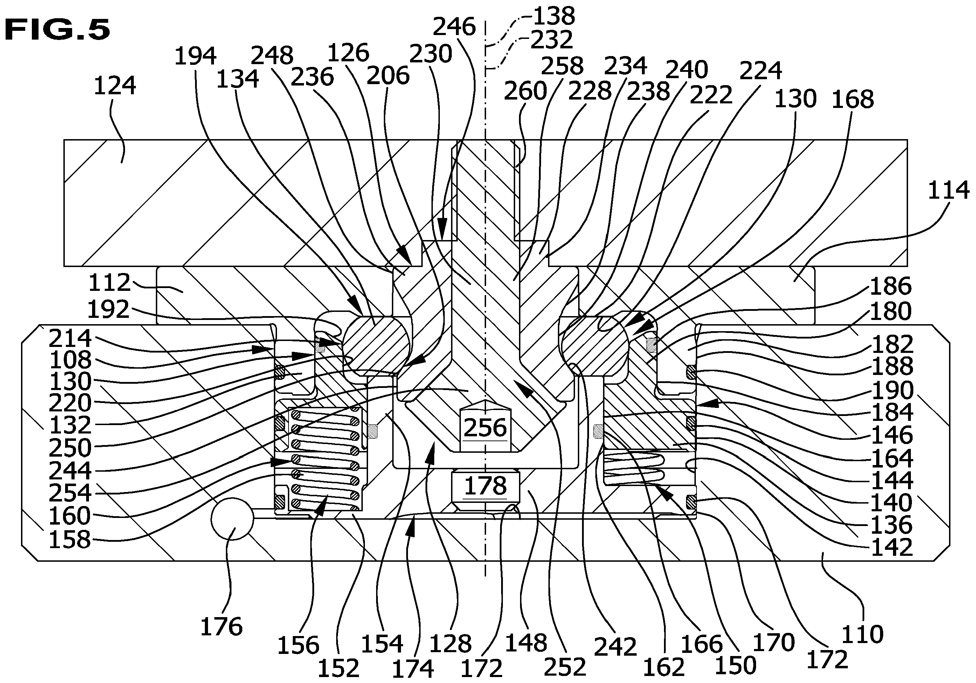

Im montierten Zustand der Spannvorrichtung, welcher in den Fig. 4 und 5 dargestellt ist, greifen die Schrauben 106 in hierzu komplementär ausgebildete (nicht dargestellte) Gewindebohrungen des Maschinentisches 110 ein, um die Spannvorrichtung 100 an dem Maschinentisch 110 zu fixieren.

Das Gehäuseteil 112 weist ferner eine mittige Ausnehmung 122 auf, durch welche ein an einem Werkstückträger 124 oder unmittelbar an einem Werkstück festgelegter Spannbolzen 126 in eine Spannbolzenaufnahme 128 der Spannvorrichtung 100 einführbar ist.

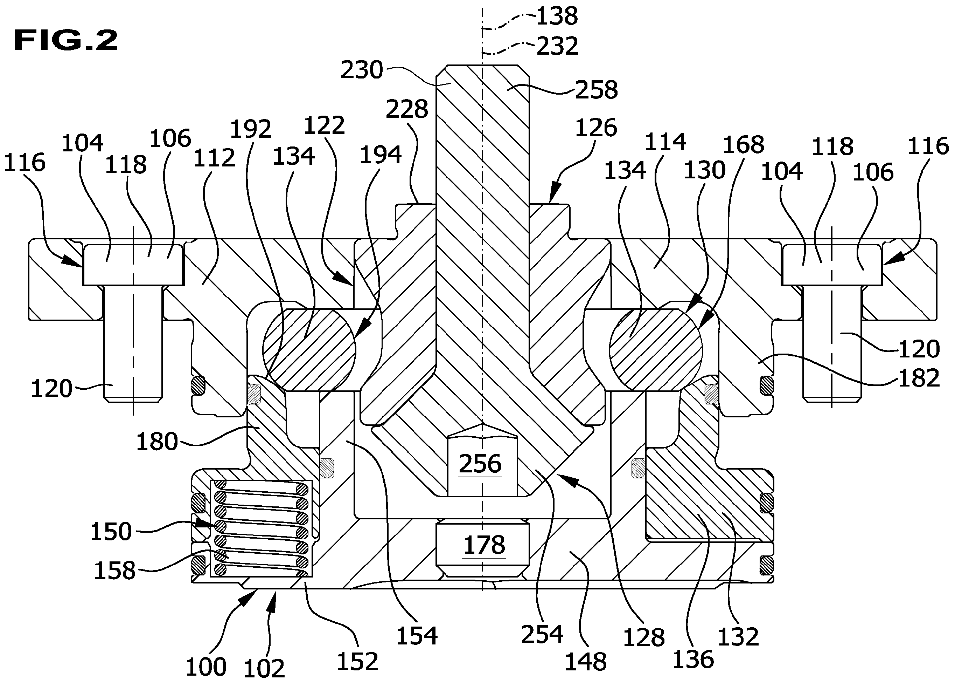

In den Fig. 2 und 4 ist ein Freigabezustand der Spannvorrichtung 100 dargestellt, in welchem der Spannbolzen 126 aus der Spannbolzenaufnahme 128 entnehmbar ist.

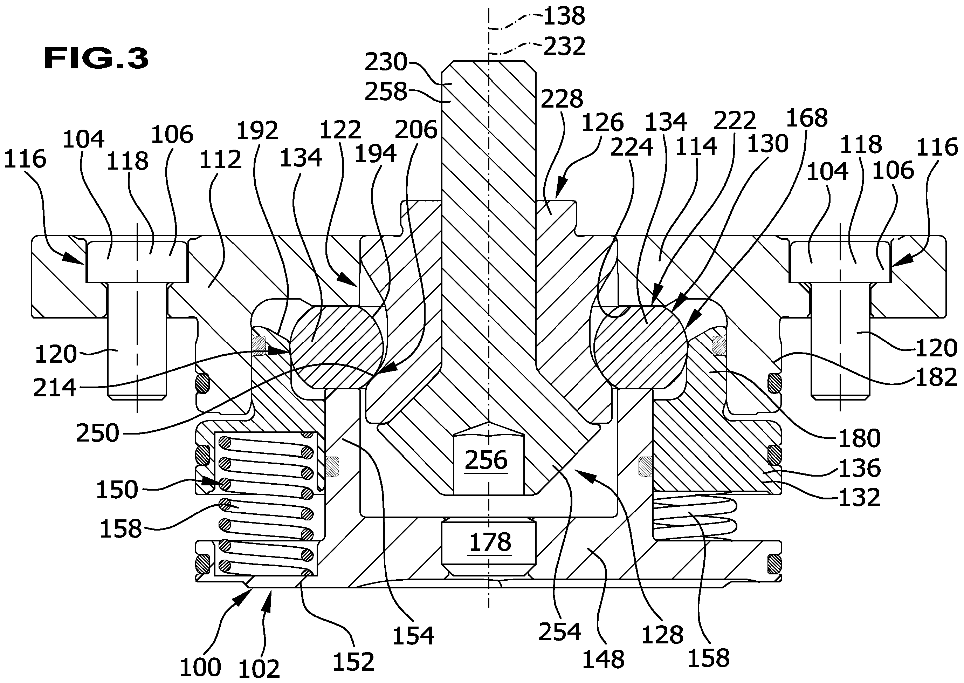

In den Fig. 3 und 5 ist die Spannvorrichtung 100 in einem Spannzustand dargestellt, in welchem die Spannvorrichtung 100 den Spannbolzen 126 in der Spannbolzenaufnahme 128 zurückhält.

Zur Verriegelung des Spannbolzens 126 in der Spannbolzenaufnahme 128 im Spannzustand der Spannvorrichtung 100 dient ein Verriegelungssystem 130 der Spannvorrichtung 100, welches einen Kolben 132 und Verriegelungselemente 134 umfasst.

Der Kolben 132 umfasst einen im Wesentlichen hohlzylindrischen Basisteil 136, dessen Längsmittelachse mit einer Längsmittelachse 138 der Spannvorrichtung 100 übereinstimmt.

An seiner äußeren Umfangsfläche 140 ist der Basisteil 136 des Kolbens 132 an einer Umfangsfläche 142 der Spannvorrichtungsaufnahme 108 des Maschinentisches 110 längs der Längsmittelachse 138 verschiebbar geführt.

Dabei dichtet ein an dem Kolben 132 vorgesehener Dichtungsring 144 einen zwischen dem Gehäuseteil 112 und dem Kolben 132 ausgebildeten Fluidraum 146 gegenüber einem zwischen dem Kolben 132 und einem Bodenteil 148 der Spannvorrichtung 100 ausgebildeten Federaufnahmeraum 150 ab.

Das Bodenteil 148 umfasst eine scheibenförmige Federauflage 152 und eine sich von der Federauflage 152 zu den Verriegelungselementen 134 hin erstreckende, im Wesentlichen hohlzylindrische Verriegelungselementauflage 154.

Längs des Umfangs der Federauflage 152 sind an derselben mehrere, vorzugsweise längs des Umfangs äquidistant verteilte, Federaufnahmeausnehmungen 156 vorgesehen, welche jeweils ein dem Kolben 132 abgewandtes Ende einer Feder 158 aufnehmen.

Die Federn 158 sind vorzugsweise als Druckfedern, insbesondere als Druck-Schraubenfedern, ausgebildet.

Alternativ hierzu können die Federn 158 auch als Tellerfedern ausgebildet sein.

Das der Federauflage 152 des Bodenteils 148 abgewandte Ende jeder Feder 158 ist an einer jeweils zugeordneten Federaufnahmeausnehmung 160 des Kolbens 132 aufgenommen.

Auf diese Weise stützt sich jede Feder 158 einerseits an dem Bodenteil 148 und andererseits an dem Kolben 132 ab.

Durch die elastische Rückstellkraft der Federn 158 wird der Kolben 132 in die in den Fig. 3 und 5 dargestellte Spannstellung des Kolbens 132 vorgespannt.

Durch Zufuhr eines Druckfluids, beispielsweise eines Drucköls oder von Druckluft, zu dem Fluidraum 146 ist der Kolben 132 gegen die elastische Rückstellkraft der Federn 158 parallel zur Längsmittelachse 138 der Spannvorrichtung 100 von der in den Fig. 3 und 5 dargestellten Spannstellung in die in den Fig. 2 und 4 dargestellte Freigabestellung bewegbar.

An seiner inneren Umfangsfläche 162 ist der Kolben 132 an einer äußeren Umfangsfläche 164 der Verriegelungselementauflage 154 des Bodenteils 148 längs der Richtung der Längsmittelachse 138 verschiebbar geführt.

Dabei dichtet ein an der äußeren Umfangsfläche der Verriegelungselementauflage 154 vorgesehener Dichtring 166 den zwischen dem Kolben 132 und dem Bodenteil 148 ausgebildeten Federaufnahmeraum 150 der Spannvorrichtung 100 gegenüber einem zwischen der Verriegelungselementauflage 154 und dem Kolben 132 einerseits und dem Gehäuseteil 112 andererseits ausgebildeten Verriegelungselementeaufnahmeraum 168 ab, in welchem die Verriegelungselemente 134 des Verriegelungssystems 130 der Spannvorrichtung 100 angeordnet sind.

An einer äußeren Umfangsfläche 170 der Federauflage 152 des Bodenteils 148 ist ein Dichtring 172 vorgesehen, welcher den zwischen dem Kolben 132 und dem Bodenteil 148 ausgebildeten Federaufnahmeraum 150 gegenüber einem zwischen dem Bodenteil 148 und einer Bodenwand 172 der Spannungsvorrichtungsaufnahme 108 ausgebildeten Blasluftraum 174 abdichtet.

Dem Blasluftraum 174 ist über eine in dem Maschinentisch 110 vorgesehene Blasluftleitung 176 unter Druck stehende Blasluft zuführbar, welche durch eine mittige Durchtrittsöffnung 178 des Bodenteils 148 in die Spannbolzenaufnahme 128 der Spannvorrichtung 100 eingeblasen werden kann, um in die Spannbolzenaufnahme 128 eingebrachte Verunreinigungen, beispielsweise Späne, aus der Spannbolzenaufnahme 128 zu entfernen, wenn sich kein Spannbolzen 126 in der Spannbolzenaufnahme 128 befindet, oder um einen in der Spannbolzenaufnahme 128 befindlichen Spannbolzen 126 abzublasen, so dass solche Verunreinigungen, beispielsweise Späne, von dem Spannbolzen 126 entfernt werden.

Der Kolben 132 der Spannvorrichtung 100 umfasst ferner einen im Wesentlichen hohlzylindrischen Verdrängungsteil 180, welcher sich von dem Basisteil 136 des Kolbens 132 aus längs der Richtung der Längsmittelachse 138 der Spannvorrichtung 100 zu dem Gehäuseteil 112 hin erstreckt und verschieblich an einem im Wesentlichen hohlzylindrischen Kolbenführungsteil 182 des Gehäuseteils 112 geführt ist.

An einer äußeren Umfangsfläche 184 des Verdrängungsteils 180 des Kolbens 132 ist ein Dichtring 186 vorgesehen, welcher den zwischen dem Kolben 136 und dem Gehäuseteil 112 ausgebildeten Fluidraum 146 gegenüber dem Verriegelungselementeaufnahmeraum 168 der Spannvorrichtung 100 abdichtet.

An einer äußeren Umfangsfläche 188 des Kolbenführungsteils 182 des Gehäuseteils 112 ist ein Dichtring 190 vorgesehen, welcher den zwischen dem Kolben 132 und dem Gehäuseteil 112 ausgebildeten Fluidraum 146 gegenüber einem dem Gehäuseteil 112 benachbarten Teilbereich der Spannvorrichtungsaufnahme 108 im Maschinentisch 110 abdichtet.

Der Verdrängungsteil 180 des Kolbens 132 steht in Kontakt mit den Verriegelungselementen 134 des Verriegelungssystems 130 und bewegt dieselben in der Radialrichtung der Längsmittelachse 138 der Spannvorrichtung 100 nach innen, wenn der Kolben 132 von der in Fig. 4 dargestellten Freigabestellung in die in Fig. 5 dargestellte Spannstellung bewegt wird.

Im Freigabezustand der Spannvorrichtung 100, welcher in den Fig. 2 und 4 dargestellt ist, liegt jedes der Verriegelungselemente 134 an einer Verdrängungsschräge 192 des Kolbens 132 an, welche gegenüber der Richtung der Längsmittelachse 138 der Spannvorrichtung 100 um einen spitzen Winkel geneigt ist.

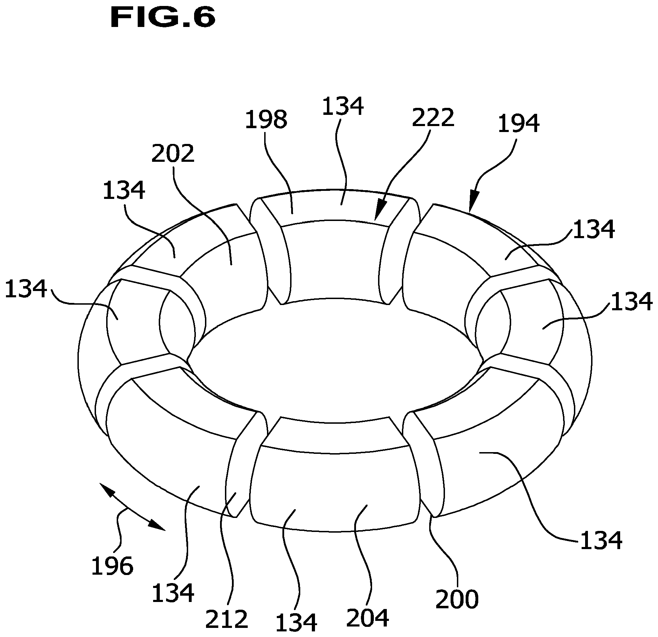

Wie aus den Fig. 6 bis 11 zu ersehen ist, bilden die mehreren, im zeichnerisch dargestellten Ausführungsbeispiel acht, Verriegelungselemente 134 einen Verriegelungselementering 194, in welchem die Verriegelungselemente 134 längs einer Umfangsrichtung des Verriegelungselementerings 194 aufeinander folgen.

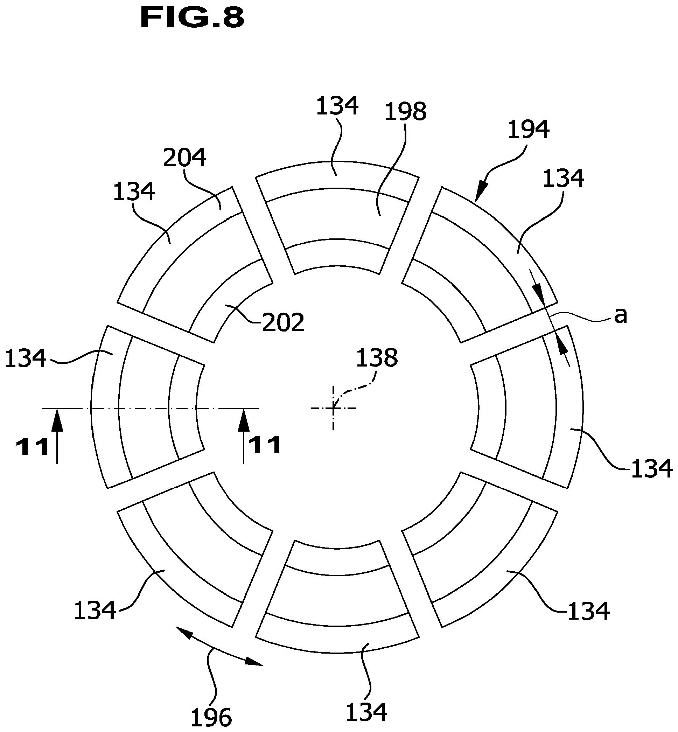

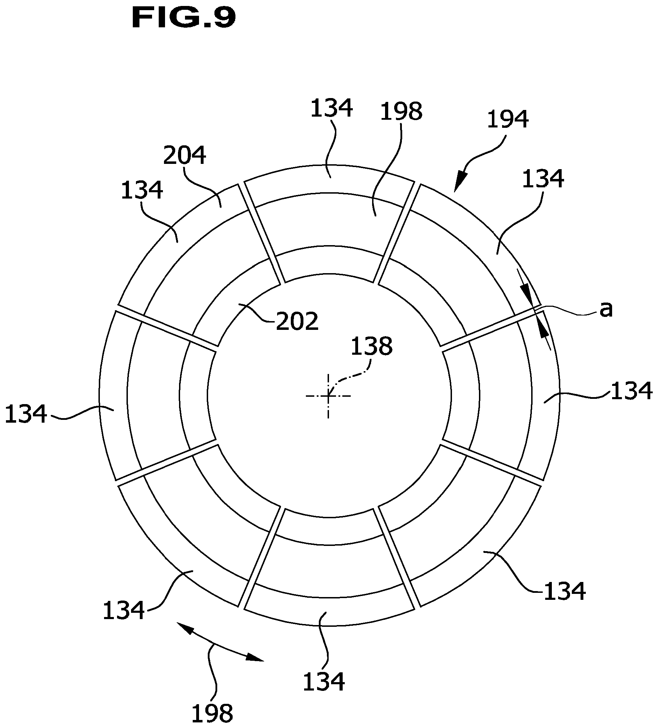

Dabei sind die in der Umfangsrichtung aufeinander folgenden Verriegelungselemente 134 längs der Umfangsrichtung um einen Abstand a voneinander beabstandet, welcher in dem in Fig. 8 dargestellten Freigabezustand des Verriegelungselementerings 194 größer ist als in dem in Fig. 9 dargestellten Spannzustand des Verriegelungselementerings 194.

Bei einer Variante dieser Ausführungsform könnte auch vorgesehen sein, dass die Verriegelungselemente 134 des Verriegelungselementerings 194 im Spannzustand des Verriegelungselementerings 194 ohne Abstand unmittelbar aneinander anliegen.

Jedes der Verriegelungselemente 134 des Verriegelungselementerings 194 ist als ein Torus-Segment ausgebildet, welches vorzugsweise längs einer Umfangsrichtung 196 des Verriegelungselements 134 und des Verriegelungselementerings 194 einen im Wesentlichen konstanten Querschnitt aufweist.

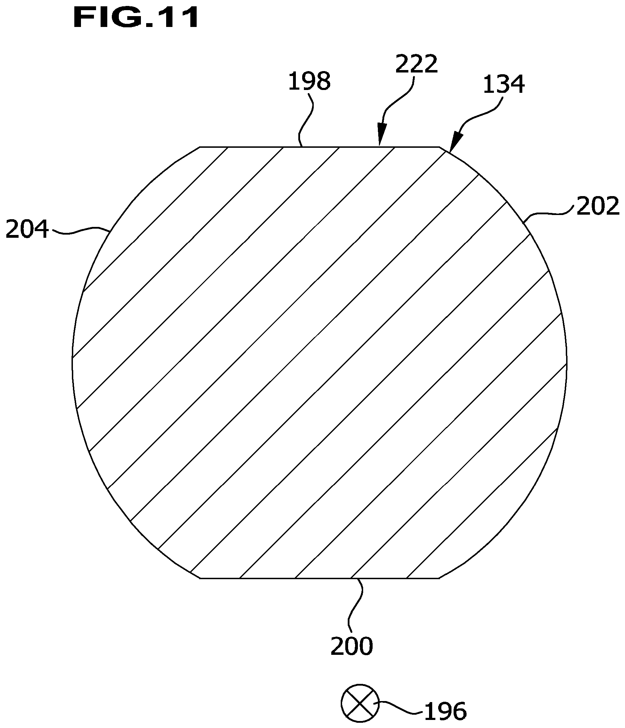

Dieser Querschnitt ist in Fig. 11 dargestellt.

Das Verriegelungselement 134 weist eine dem Gehäuseteil 112 zugewandte erste ebene Begrenzungsfläche 198 und eine dem Gehäuseteil 112 abgewandte zweite ebene Begrenzungsfläche 200 auf.

Die erste ebene Begrenzungsfläche 198 und die zweite ebene Begrenzungsfläche 200 sind vorzugsweise parallel zueinander ausgerichtet.

Ferner weist das Verriegelungselement 134 eine der Längsmittelachse 138 der Spannvorrichtung 100 zugewandte innere gekrümmte Umfangsfläche 202 und eine der Längsmittelachse 138 abgewandte äußere gekrümmte Umfangsfläche 204 auf.

Bei dieser ersten Ausführungsform sind die erste ebene Begrenzungsfläche 198 und die zweite ebene Begrenzungsfläche 200 durch die innere gekrümmte Umfangsfläche 202 und die äußere gekrümmte Umfangsfläche 204 miteinander verbunden.

Wie aus den Fig. 3 und 5 zu ersehen ist, liegt in dem Spannzustand der Spannvorrichtung 100, in welchem der Spannbolzen 126 in der Spannbolzenaufnahme 128 der Spannvorrichtung 100 verriegelt ist, jedes der Verriegelungselemente 134 lastübertragend an dem Kolben 132, an dem Gehäuseteil 112 und an dem Spannbolzen 126 an jeweils einer Kontaktstelle an.

Dabei ist die jeweilige Spannbolzen-Kontaktstelle 206, mit welcher das jeweilige Verriegelungselement 134 in dem Spannzustand an dem Spannbolzen 126 anliegt, linienförmig ausgebildet.

Dies bedeutet, dass die Spannbolzen-Kontaktstelle 206 sich in einer Längsrichtung 208, welche hier der Umfangsrichtung 196 des Verriegelungselements 134 beziehungsweise des Verriegelungselementerings 194 entspricht, über eine große Strecke s erstreckt, welche in der Größenordnung der Erstreckung des jeweiligen Verriegelungselements 134 längs der Umfangsrichtung 196 liegt, während die Ausdehnung der Spannbolzen-Kontaktstelle 206 in einer zu der Längsrichtung 208 senkrecht ausgerichteten Querrichtung 210 im Verhältnis zu der Längserstreckung s der Spannbolzen-Kontaktstelle 206 sehr klein ist.

Vorzugsweise ist der Krümmungsradius der Oberfläche des Verriegelungselements 134 im Bereich der Spannbolzen-Kontaktstelle 206, in einer senkrecht auf der Umfangsrichtung 196 des Verriegelungselements 134 beziehungsweise des Verriegelungselementerings 194 stehenden Ebene 212, maximal 10 mm, besonders bevorzugt maximal 5 mm.

Dies führt zu einer ringförmigen Linienbelastung der Verriegelungselemente 134 des Verriegelungselementerings 194 durch den Spannbolzen 126 beziehungsweise zu einer ringförmigen Linienbelastung des Spannbolzens 126 durch die Verriegelungselemente 134 des Verriegelungselementerings 194.

Diese Linienbelastung, die über die linienförmige Spannbolzen-Kontaktstelle 206 übertragen wird, ist aufgrund der linearen Ausdehnung der Spannbolzen-Kontaktstelle 206 geringer als bei einer Punktbelastung an einer punktförmigen Spannbolzen-Kontaktstelle, wie sie auftreten würde, wenn die Verriegelungselemente 134 der Spannvorrichtung 100 beispielsweise als Verriegelungskugeln ausgebildet wären.

Wie aus den Fig. 3 und 5 ferner zu ersehen ist, liegt jedes der Verriegelungselemente 134 des Verriegelungselementerings 194 im Spannzustand der Spannvorrichtung 100, in welchem der Spannbolzen 126 in der Spannbolzenaufnahme 128 der Spannvorrichtung 100 verriegelt ist, auch an dem Kolben 132, vorzugsweise an dem Verdrängungsteil 180 des Kolbens 132, lastübertragend an einer Kolben-Kontaktstelle 214 an, wobei die Kolben-Kontaktstelle 214, mit welcher das jeweilige Verriegelungselement 134 in dem Spannzustand der Spannvorrichtung 100 an dem Kolben 132 anliegt, linienförmig ausgebildet ist.

Die Kolben-Kontaktstelle 214 befindet sich jeweils an der äußeren gekrümmten Umfangsfläche 204 des betreffenden Verriegelungselements 134.

Die linienförmige Kolben-Kontaktstelle 214 erstreckt sich längs ihrer Längsrichtung 216, welche mit der Umfangsrichtung 196 des Verriegelungselements 134 beziehungsweise des Verriegelungselementerings 194 übereinstimmt, über eine Strecke s', welche in derselben Größenordnung liegt wie die Ausdehnung des betreffenden Verriegelungselements 134 längs der Umfangsrichtung 196.

In der senkrecht zu der Längsrichtung 216 ausgerichteten Querrichtung 218 erstreckt sich die Kolben-Kontaktstelle 214 hingegen über eine Strecke, welche sehr viel kleiner ist als die Erstreckung s' in der Längsrichtung 216 der Kolben-Kontaktstelle 214.

Die Oberfläche des Verriegelungselements 134 weist in der Ebene 212, die senkrecht auf der Umfangsrichtung 196 des Verriegelungselements 134 beziehungsweise des Verriegelungselementerings 194 steht, einen Krümmungsradius auf, welcher vorzugsweise maximal 10 mm, besonders bevorzugt maximal 5 mm, beträgt.

Dies führt dazu, dass die Verriegelungselemente 134 des Verriegelungselementerings 194 im Spannzustand der Spannvorrichtung 100 einer ringförmigen Linienbelastung durch den Kolben 132 unterliegen und dass der Kolben 132 im Spannzustand der Spannvorrichtung 100 einer ringförmigen Linienbelastung durch die Verriegelungselemente 134 des Verriegelungselementerings 194 unterliegt.

Durch die Linienförmigkeit der Kolben-Kontaktstelle 214 wird die jeweilige lokale Belastung des Kolbens 132 durch die Verriegelungselemente 134 beziehungsweise die jeweilige lokale Belastung der Verriegelungselemente 134 durch den Kolben 132 im Vergleich zu der Punktbelastung reduziert, welcher der Kolben 132 unterliegen würde, wenn die Verriegelungselemente 134 als Verriegelungskugeln ausgebildet wären.

Mit der Kolben-Kontaktstelle 214 liegt jedes Verriegelungselement 134 im Spannzustand der Spannvorrichtung 100 an einer Verriegelungselement-Kontaktfläche 220 des Kolbens 132 an, welche gegenüber der Längsmittelachse 138 der Spannvorrichtung 100 um einen kleinen spitzen Winkel β geneigt ist.

Dabei beträgt der Winkel β vorzugsweise weniger als 8°, insbesondere weniger als 6°, beispielsweise ungefähr 5°.

Ferner beträgt der Winkel β vorzugsweise mehr als 2°, insbesondere mehr als 4°, beispielsweise ungefähr 5°.

Wie aus den Fig. 3 und 5 ferner zu ersehen ist, liegt jedes der Verriegelungselemente 134 des Verriegelungselementerings 194 im Spannzustand der Spannvorrichtung 100, in welchem der Spannbolzen 126 in der Spannbolzenaufnahme 128 der Spannvorrichtung 100 verriegelt ist, auch an dem Gehäuseteil 112 lastübertragend an einer Gehäuseteil-Kontaktstelle 222 an, wobei die Gehäuseteil-Kontaktstelle 222, mit welcher das jeweilige Verriegelungselement 134 in dem Spannzustand der Spannvorrichtung 100 an dem Gehäuseteil 112 anliegt, flächenförmig ausgebildet ist.

Die Gehäuseteil-Kontaktstelle 222 bildet einen Bestandteil der ersten ebenen Begrenzungsfläche 198 des jeweiligen Verriegelungselements 134 und kann die gesamte erste ebene Begrenzungsfläche 198 des Verriegelungselements 134 umfassen.

Die Gehäuseteil-Kontaktstelle 222 ist vorzugsweise im Wesentlichen eben ausgebildet.

Die Gehäuseteil-Kontaktstelle 222 ist vorzugsweise senkrecht zu der Längsmittelachse 138 der Spannvorrichtung 100 ausgerichtet.

Die Gehäuseteil-Kontaktstelle 222 liegt im Spannzustand der Spannvorrichtung 100 flächig an einer Verriegelungselement-Kontaktfläche 224 an der den Verriegelungselementen 134 zugewandten Seite des Gehäuseteils 112 an.

Das flächige Anliegen der Gehäuseteil-Kontaktstelle 222 des Verriegelungselements 134 an der Verriegelungselement-Kontaktfläche 224 des Gehäuseteils 112 im Spannzustand der Spannvorrichtung 100 führt dazu, dass die Verriegelungselemente 134 des Verriegelungselementerings 194 im Spannzustand der Spannvorrichtung 100 einer ringförmigen Flächenbelastung durch das Gehäuseteil 112 unterliegen und dass das Gehäuseteil 112 im Spannzustand der Spannvorrichtung 100 einer ringförmigen Flächenbelastung durch die Verriegelungselemente 134 des Verriegelungselementerings 194 unterliegt.

Durch die Flächenförmigkeit der Gehäuseteil-Kontaktstellen 222 wird die jeweilige lokale Belastung des Gehäuseteils 112 durch die Verriegelungselemente 134 beziehungsweise die jeweilige lokale Belastung der Verriegelungselemente 134 durch das Gehäuseteil 112 im Vergleich zu der Punktbelastung reduziert, welcher das Gehäuseteil 112 unterliegen würde, wenn die Verriegelungselemente 134 als Verriegelungskugeln ausgebildet wären.

Der Spannbolzen 126, welcher an einem Werkstückträger 124 oder unmittelbar an einem (nicht dargestellten) Werkstück festgelegt ist, umfasst bei dem zeichnerisch dargestellten Ausführungsbeispiel eine Spannbolzenhülse 228 und eine Fangschraube 230.

Die Spannbolzenhülse 228 ist im Wesentlichen rotationssymmetrisch zu ihrer Längsmittelachse 232 ausgebildet, welche im Spannzustand der Spannvorrichtung 100 im Wesentlichen mit der Längsmittelachse 138 der Spannvorrichtung 100 zusammenfällt.

Die Spannbolzenhülse 228 umfasst einen Sockelabschnitt 234, einen sich an den Sockelabschnitt 234 anschließenden Zentrierabschnitt 236, einen sich an den Zentrierabschnitt 236 anschließenden ersten konischen Abschnitt 238, einen sich an den ersten konischen Abschnitt 238 anschließenden zylindrischen Abschnitt 240, einen sich an den zylindrischen Abschnitt 240 anschließenden zweiten konischen Abschnitt 242 und einen sich an den zweiten konischen Abschnitt 242 anschließenden Endabschnitt 244.

Der Sockelabschnitt 234 der Spannbolzenhülse 228 greift in eine Spannbolzenaufnahme 128 des Werkstückträgers 124 ein, wenn der Spannbolzen 126 an dem Werkstückträger 124 montiert ist.

Der Zentrierabschnitt 236 der Spannbolzenhülse 228 liegt im Spannzustand der Spannvorrichtung 100 mit seiner zylindrischen Umfangsfläche 248 an der zylindrischen Begrenzungsfläche der mittigen Ausnehmung 122 in dem Gehäuseteil 112 an, um so den Spannbolzen 126 in der Spannbolzenaufnahme 128 der Spannvorrichtung 100 zu zentrieren.

Der erste konische Abschnitt 238 und der zylindrische Abschnitt 240 der Spannbolzenhülse 228 begrenzen eine Ausnehmung an dem Umfang des Spannbolzens 126, in welche die Verriegelungselemente 134 im Spannzustand der Spannvorrichtung 100 eingreifen können, ohne in diesem Bereich den Spannbolzen 126 zu berühren.

Der zweite konische Abschnitt 242 der Spannbolzenhülse 228 weist eine konische Verriegelungselement-Kontaktfläche 250 auf, an welcher im Spannzustand der Spannvorrichtung 100 die Spannbolzen-Kontaktstellen 206 der Verriegelungselemente 134 lastübergreifend anliegen.

Die Verriegelungselement-Kontaktfläche 250 des Spannbolzens 126 ist gegenüber der Längsmittelachse 132 des Spannbolzens 126 und damit auch gegenüber der Längsmittelachse 138 der Spannvorrichtung 100 um einen Winkel γ geneigt.

Der Winkel γ beträgt vorzugsweise weniger als 45°, insbesondere weniger als 40°, beispielsweise ungefähr 35°.

Ferner beträgt der Winkel γ vorzugsweise mehr als 25°, insbesondere mehr als 30°, beispielsweise ungefähr 35°.

An dem Endabschnitt 244 der Spannbolzenhülse 228 ist stirnseitig eine im Wesentlichen kegelstumpfförmige Schraubenkopfaufnahme 252 vorgesehen, welche einen hierzu komplementär ausgebildeten Teil eines Schraubenkopfs 254 der Fangschraube 230 des Spannbolzens 126 aufnimmt.

Der Schraubenkopf 254 der Fangschraube 230 ist mit einer Ausnehmung 256 versehen, in welche ein Werkzeug, beispielsweise ein Schraubendreher, eingreifen kann, um die Fangschraube um ihre Längsmittelachse zu drehen.

Die Ausnehmung 256 kann beispielsweise einen polygonalen Querschnitt, insbesondere einen sechseckigen Querschnitt, aufweisen.

Ein Schaft 258 der Fangschraube 230 erstreckt sich von dem Schraubenkopf 254 aus durch eine mittige Bohrung der Spannbolzenhülse 228 hindurch in eine Gewindebohrung 260 des Werkstückträgers 124 hinein, wo ein Außengewinde der Fangschraube 230 in Eingriff mit einem Innengewinde der Gewindebohrung 260 steht, um die Fangschraube 230 und die mittels der Fangschraube 230 formschlüssig an dem Werkstückträger 124 gehaltene Spannbolzenhülse 228 an dem Werkstückträger 124 zu sichern.

Zum präzisen und positionsgenauen Einspannen des Werkstückträgers 124 an der Spannvorrichtung 100 wird der Werkstückträger 124 so an die Spannvorrichtung 100 herangeführt, dass der an dem Werkstückträger 124 montierte Spannbolzen 126 durch die mittige Ausnehmung 122 des als Gehäusedeckel 114 dienenden Gehäuseteils 112 der Spannvorrichtung 100 hindurch in die Spannbolzenaufnahme 128 der Spannvorrichtung 100 gelangt (siehe die Fig. 2 und 4).

Um das Einbringen des Spannbolzens 126 in die Spannbolzenaufnahme 128 zu ermöglichen, ist zuvor dem Fluidraum 146 der Spannvorrichtung 100 unter Druck stehendes Fluid zugeführt worden, um den Kolben 132 gegen die elastische Rückstellkraft der Federn 158 längs der Längsmittelachse 138 der Spannvorrichtung 100 in Richtung auf das Bodenteil 148 zu zu bewegen.

Hierdurch wird der Verdrängungsteil 180 des Kolbens 132 aus dem Verriegelungselementeaufnahmeraum 168 der Spannvorrichtung 100 heraus bewegt, so dass die Verriegelungselemente 134 des Verriegelungselementerings 194 radial nach außen in die in den Fig. 2 und 4 dargestellte Freigabestellung gelangen können, in welcher sie die Bewegung des Spannbolzens 126 in die Spannbolzenaufnahme 128 hinein nicht behindern.

Wenn sich der Spannbolzen 126 vollständig in der Spannbolzenaufnahme 128 befindet, wird die Beaufschlagung des Fluidraums 146 mit unter Druck stehendem Fluid unterbrochen, worauf der Kolben 132 durch die elastische Rückstellkraft der Federn 158 längs der Längsmittelachse 138 der Spannvorrichtung 100 in Richtung auf das Gehäuseteil 112 zu bewegt wird.

Dabei werden die Verriegelungselemente 134 des Verriegelungselementrings 194 von dem Verdrängungsteil 180 des Kolbens 132 radial nach innen, zu der Längsmittelachse 138 und zu dem Spannbolzen 126 hin, verdrängt, bis der in den Fig. 3 und 5 dargestellte Spannzustand der Spannvorrichtung 100 erreicht ist, in welchem der Spannbolzen 126 durch die Verriegelungselemente 134 in der Spannvorrichtung 100 verriegelt ist.

Dabei bildet die Verriegelungselement-Kontaktfläche 250 des Spannbolzens 126 eine Hinterschneidung, welche die Verriegelungselemente 134 in der Spannstellung der Spannvorrichtung 100 hintergreift.

Um - beispielsweise nach einer erfolgten Bearbeitung eines Werkstücks - den Werkstückträger 124 wieder von der Spannvorrichtung 100 lösen zu können, wird dem Fluidraum 146 der Spannvorrichtung 100 wieder Fluid unter erhöhtem Druck zugeführt, wodurch der Kolben 132 wieder in die in den Fig. 2 und 4 dargestellte Freigabestellung bewegt wird. Dadurch können die Verriegelungselemente 134 wieder radial nach außen in ihre Freigabestellung bewegt werden, in welcher sie ein Herausbewegen des Spannbolzens 126 aus der Spannbolzenaufnahme 128 nicht behindern.

Nun kann der Werkstückträger 124 von der Spannvorrichtung 100 entfernt werden, wobei der Spannbolzen 126 aus der Spannbolzenaufnahme 128 der Spannvorrichtung 100 herausgelangt.

Anschließend kann ein neuer Spannvorgang durchgeführt werden, mittels welchem derselbe Werkstückträger 124 nochmals oder ein anderer Werkstückträger 124 an der Spannvorrichtung 100 eingespannt wird.

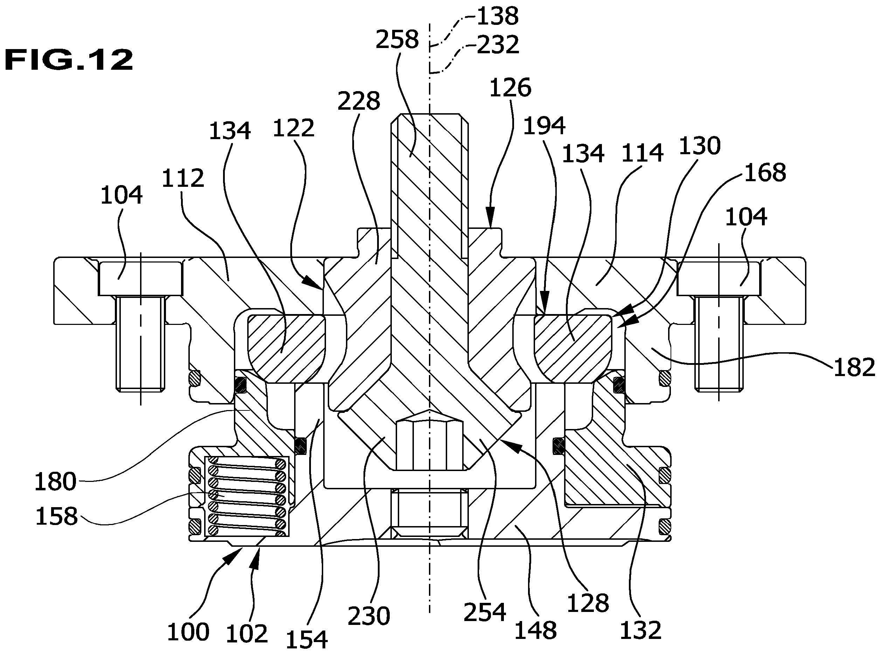

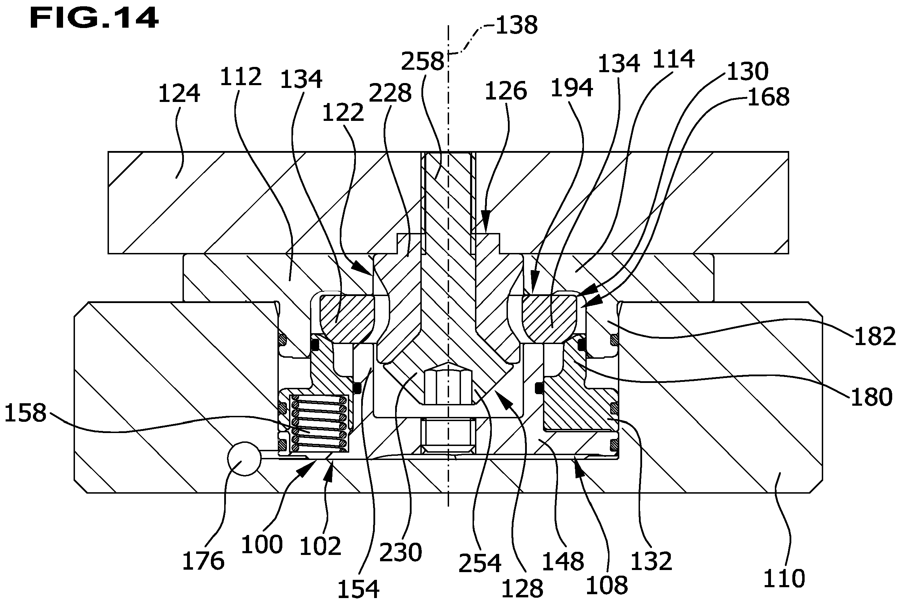

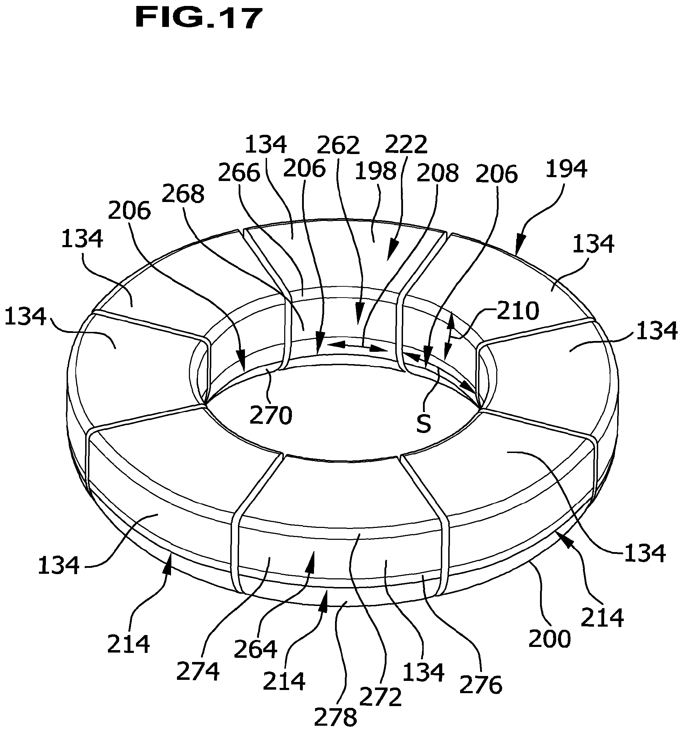

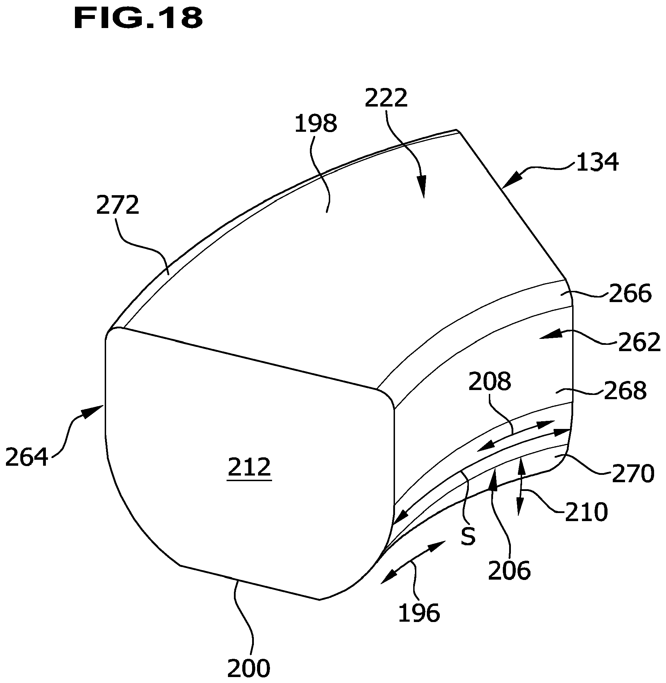

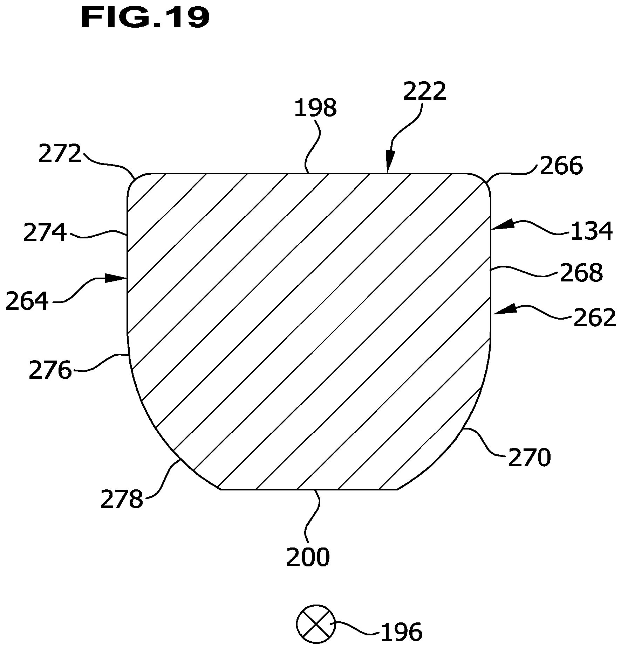

Eine in den Fig. 12 bis 19 dargestellte zweite Ausführungsform einer Spannvorrichtung 100 unterscheidet sich von der in den Fig. 1 bis 11 dargestellten ersten Ausführungsform durch die Gestaltung der Verriegelungselemente 134 des Verriegelungselementerings 194 der Spannvorrichtung 100.

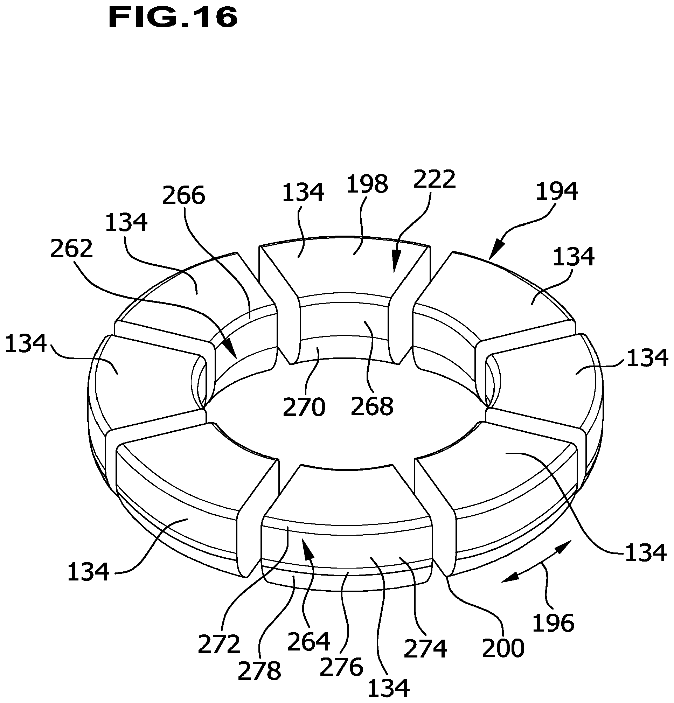

Wie am besten aus den Fig. 16, 18 und 19 zu ersehen ist, ist auch bei dieser Ausführungsform jedes Verriegelungselement 134 als ein Torus-Segment ausgebildet.

Jedes der Verriegelungselemente 134 weist eine erste ebene Begrenzungsfläche 198 auf, welche senkrecht zu der Längsmittelachse 138 der Spannvorrichtung 100 ausgebildet ist.

Ferner weist jedes der Verriegelungselemente 134 eine zweite ebene Begrenzungsfläche 200 auf, welche senkrecht zu der Längsmittelachse 138 der Spannvorrichtung 100 ausgerichtet ist.

Die erste ebene Begrenzungsfläche 198 und die zweite ebene Begrenzungsfläche 200 sind über eine der Längsmittelachse 138 der Spannvorrichtung 100 zugewandte innere Umfangsfläche und eine der Längsmittelachse 138 abgewandte äußere Umfangsfläche 264 miteinander verbunden.

Die innere Umfangsfläche 262 umfasst einen der ersten ebenen Begrenzungsfläche 198 benachbarten ersten konvex gekrümmten Abschnitt 266.

Der erste konvex gekrümmte Abschnitt 266 geht in einen im Wesentlichen ebenen Abschnitt 268 über.

Der ebene Abschnitt 268 ist vorzugsweise im Wesentlichen parallel zu der Längsmittelachse 138 der Spannvorrichtung 100 ausgerichtet.

Der ebene Abschnitt 268 der inneren Umfangsfläche 262 geht an seinem dem ersten konvex gekrümmten Abschnitt 266 abgewandten Rand in einen zweiten konvex gekrümmten Abschnitt 270 über.

Der zweite konvex gekrümmte Abschnitt 270 der inneren Umfangsfläche 262 ist der zweiten ebenen Begrenzungsfläche 200 des Verriegelungselements 134 benachbart.

Die äußere Umfangsfläche 264 des Verriegelungselement 134 umfasst einen ersten konvex gekrümmten Abschnitt 272, welcher der ersten ebenen Begrenzungsfläche 198 des Verriegelungselements 134 benachbart ist.

Der erste konvex gekrümmte Abschnitt 272 der äußeren Umfangsfläche 264 geht an seinem der ersten ebenen Begrenzungsfläche 198 abgewandten Rand in einen zylindrischen Abschnitt 274 über.

Der zylindrische Abschnitt 274 der äußeren Umfangsfläche 264 ist parallel zu der Längsmittelachse 138 der Spannvorrichtung 100 ausgerichtet.

Der zylindrische Abschnitt 274 der äußeren Umfangsfläche 264 geht an seinem dem ersten konvex gekrümmten Abschnitt 272 abgewandten Rand in einen konischen Abschnitt 276 über.

Der konische Abschnitt 276 der äußeren Umfangsfläche 264 ist gegenüber der Längsmittelachse 138 der Spannvorrichtung 100 um einen kleinen spitzen Winkel δ geneigt.

Der Winkel δ beträgt vorzugsweise weniger als 8°, insbesondere weniger als 6°, beispielsweise ungefähr 5°.

Ferner beträgt der Winkel δ vorzugsweise mehr als 2°, insbesondere mehr als 4°, beispielsweise ungefähr 5°.

Vorzugsweise ist der Winkel δ, um welchen der konische Abschnitt 276 gegenüber der Längsmittelachse 138 der Spannvorrichtung 100 geneigt ist, im Wesentlichen gleich groß wie der Winkel β, um welchen die Verriegelungselement-Kontaktfläche 220 des Kolbens 132 der Spannvorrichtung 100 gegenüber der Längsmittelachse 138 der Spannvorrichtung 100 geneigt ist.

An einen dem zylindrischen Abschnitt 274 der äußeren Umfangsfläche 264 abgewandten Rand des konischen Abschnitts 276 der äußeren Umfangsfläche 264 schließt sich ein zweiter konvex gekrümmter Abschnitt 278 der äußeren Umfangsfläche 264 an.

Der zweite konvex gekrümmte Abschnitt 278 der äußeren Umfangsfläche 264 ist der zweiten ebenen Begrenzungsfläche 200 des Verriegelungselements 134 benachbart.

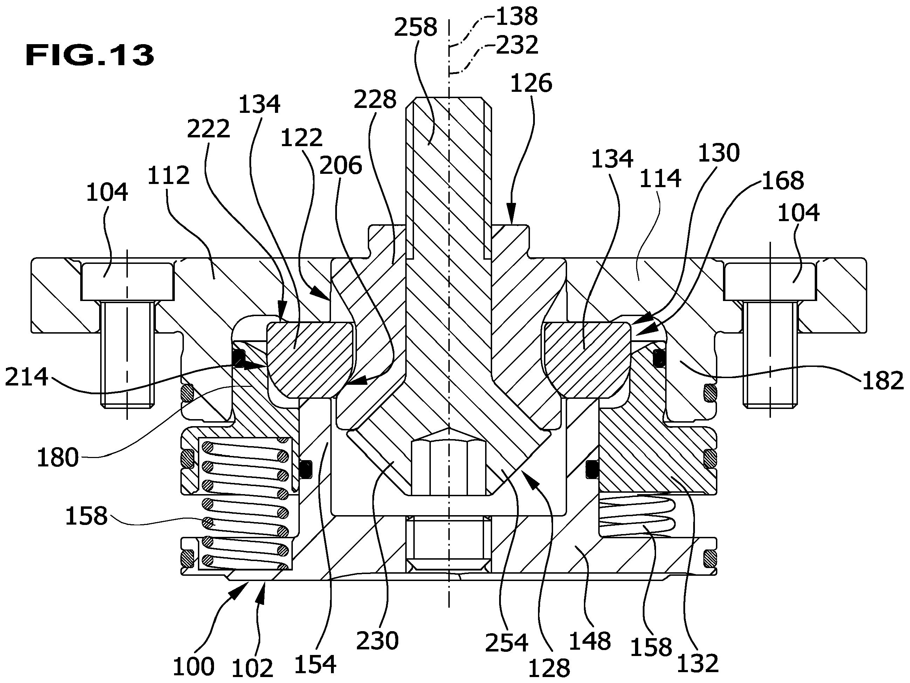

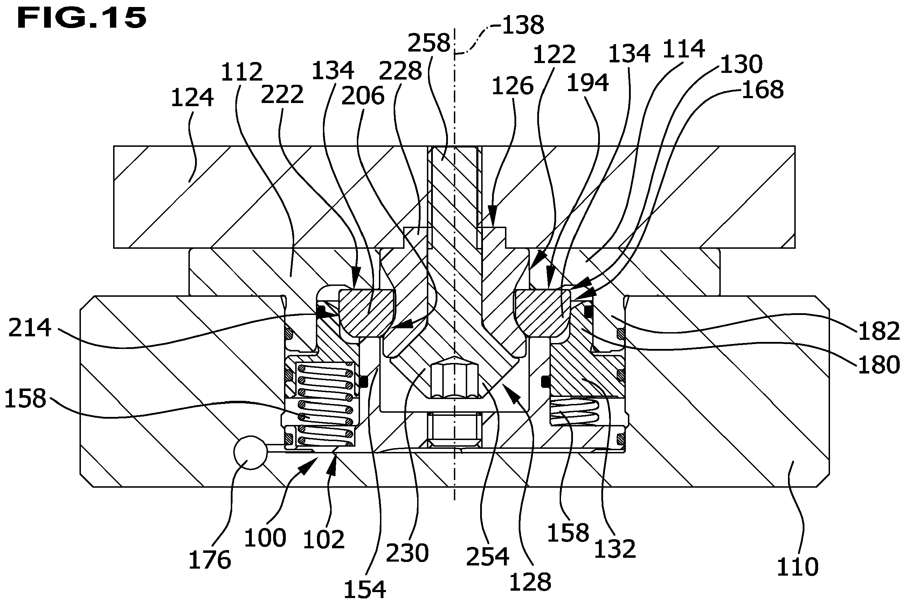

Wie aus den Fig. 13 und 15 zu ersehen ist, liegt in dem Spannzustand der Spannvorrichtung 100, in welchem der Spannbolzen 126 in der Spannbolzenaufnahme 128 der Spannvorrichtung 100 verriegelt ist, jedes der Verriegelungselemente 134 der zweiten Ausführungsform einer Spannvorrichtung 100 lastübertragend an dem Kolben 132, an dem Gehäuseteil 112 und an dem Spannbolzen 126 an jeweils einer Kontaktstelle an.

Dabei ist die jeweilige Spannbolzen-Kontaktstelle 206, mit welcher das jeweilige Verriegelungselement 134 in dem Spannzustand an dem Spannbolzen 126 anliegt, linienförmig ausgebildet.

Dies bedeutet, dass die Spannbolzen-Kontaktstelle 206 sich in einer Längsrichtung 208, welche hier der Umfangsrichtung 196 des Verriegelungselements 134 beziehungsweise des Verriegelungselementerings 194 entspricht, über eine große Strecke s erstreckt, welche in der Größenordnung der Erstreckung des jeweiligen Verriegelungselements 134 längs der Umfangsrichtung 196 liegt, während die Ausdehnung der Spannbolzen-Kontaktstelle 206 in einer zu der Längsrichtung 208 senkrecht ausgerichteten Querrichtung 210 im Verhältnis zu der Längserstreckung s der Spannbolzen-Kontaktstelle 206 sehr klein ist.

Vorzugsweise ist der Krümmungsradius der Oberfläche des Verriegelungselements 134 im Bereich der Spannbolzen-Kontaktstelle 206, in einer senkrecht auf der Umfangsrichtung 196 des Verriegelungselements 134 beziehungsweise des Verriegelungselementerings 194 stehenden Ebene 212, maximal 10 mm, besonders bevorzugt maximal 5 mm.

Dies führt zu einer ringförmigen Linienbelastung der Verriegelungselemente 134 des Verriegelungselementerings 194 durch den Spannbolzen 126 beziehungsweise zu einer ringförmigen Linienbelastung des Spannbolzens 126 durch die Verriegelungselemente 134 des Verriegelungselementerings 194.

Diese Linienbelastung, die über die linienförmige Spannbolzen-Kontaktstelle 206 übertragen wird, ist aufgrund der linearen Ausdehnung der Spannbolzen-Kontaktstelle 206 geringer als bei einer Punktbelastung an einer punktförmigen Spannbolzen-Kontaktstelle, wie sie auftreten würde, wenn die Verriegelungselemente 134 der Spannvorrichtung 100 beispielsweise als Verriegelungskugeln ausgebildet wären.

Die Spannbolzen-Kontaktstelle 206 jedes Verriegelungselements 134 liegt bei dieser Ausführungsform einer Spannvorrichtung 100 im Bereich des zweiten konvex gekrümmten Abschnitts 270 der inneren Umfangsfläche 262 des Verriegelungselements 134.

Wie aus den Fig. 13 und 15 ferner zu ersehen ist, liegt jedes der Verriegelungselemente 134 des Verriegelungselementerings 194 im Spannzustand der Spannvorrichtung 100, in welchem der Spannbolzen 126 in der Spannbolzenaufnahme 128 der Spannvorrichtung 100 verriegelt ist, an dem Kolben 132, vorzugsweise an dem Verdrängungsteil 180 des Kolbens 132, lastübertragend an einer Kolben-Kontaktstelle 214 an, wobei die Kolben-Kontaktstelle 214, mit welcher das jeweilige Verriegelungselement 134 in dem Spannzustand der Spannvorrichtung 100 an dem Kolben 132 anliegt, bei dieser zweiten Ausführungsform einer Spannvorrichtung 100 flächenförmig ausgebildet ist.

Die Kolben-Kontaktstelle 214 wird bei dieser Ausführungsform durch den konischen Abschnitt 276 der äußeren Umfangsfläche 264 des jeweiligen Verriegelungselements 134 gebildet.

Dieser konische Abschnitt 276 der äußeren Umfangsfläche 264 (beziehungsweise die flächenförmig ausgebildete Kolben-Kontaktstelle 214) liegt im in den Fig. 13 und 15 dargestellten Spannzustand der Spannvorrichtung 100 flächig an einer Verriegelungselement-Kontaktfläche 220 des Kolbens 132 an, welche gegenüber der Längsmittelachse 138 der Spannvorrichtung 100 um den kleinen spitzen Winkel β geneigt ist, welcher vorzugsweise im Wesentlichen gleich groß ist wie der kleine spitze Winkel δ, um welchen der konische Abschnitt 276 der äußeren Umfangsfläche 164 des Verriegelungselements 134 gegenüber der Längsmittelachse 138 der Spannvorrichtung 100 geneigt ist.

Die Kolben-Kontaktstelle 214 des Verriegelungselements 134 ist vorzugsweise im Wesentlichen konisch ausgebildet.

Das flächige Anliegen der Kolben-Kontaktstelle 214 des Verriegelungselements 134 an der Verriegelungselement-Kontaktfläche 220 des Kolbens 132 im Spannzustand der Spannvorrichtung 100 führt dazu, dass die Verriegelungselemente 134 des Verriegelungselementerings 194 im Spannzustand der Spannvorrichtung 100 einer ringförmigen Flächenbelastung durch den Kolben 132 unterliegen und dass der Kolben 132 im Spannzustand der Spannvorrichtung 100 einer ringförmigen Flächenbelastung durch die Verriegelungselemente 134 des Verriegelungselementerings 194 unterliegt.

Durch die Flächenförmigkeit der Kolben-Kontaktstellen 214 der Verriegelungselemente 134 wird die jeweilige lokale Belastung des Kolbens 132 durch die Verriegelungselemente 134 beziehungsweise die jeweilige lokale Belastung der Verriegelungselemente 134 durch den Kolben 132 im Vergleich zu der Punktbelastung reduziert, welcher der Kolben 132 unterliegen würde, wenn die Verriegelungselemente 134 als Verriegelungskugeln ausgebildet wären.

Wie aus den Fig. 13 und 15 ferner zu ersehen ist, liegt jedes der Verriegelungselemente 134 des Verriegelungselementerings 194 im Spannzustand der Spannvorrichtung 100, in welchem der Spannbolzen 126 in der Spannbolzenaufnahme 128 der Spannvorrichtung 100 verriegelt ist, auch an dem Gehäuseteil 112 lastübertragend an einer Gehäuseteil-Kontaktstelle 222 an, wobei die Gehäuseteil-Kontaktstelle 222, mit welcher das jeweilige Verriegelungselement 134 in dem Spannzustand der Spannvorrichtung 100 an dem Gehäuseteil 112 anliegt, bei dieser zweiten Ausführungsform flächenförmig ausgebildet ist.

Die Gehäuseteil-Kontaktstelle 222 bildet einen Bestandteil der ersten ebenen Begrenzungsfläche 198 des jeweiligen Verriegelungselements 134 und kann die gesamte erste ebene Begrenzungsfläche 198 des Verriegelungselements 134 umfassen.

Die Gehäuseteil-Kontaktstelle 222 ist vorzugsweise im Wesentlichen eben ausgebildet.

Die Gehäuseteil-Kontaktstelle 222 ist vorzugsweise senkrecht zu der Längsmittelachse 138 der Spannvorrichtung 100 ausgerichtet.

Die Gehäuseteil-Kontaktstelle 222 liegt im Spannzustand der Spannvorrichtung 100 flächig an einer Verriegelungselement-Kontaktfläche 224 an der den Verriegelungselementen 134 zugewandten Seite des Gehäuseteils 112 an.

Das flächige Anliegen der Gehäuseteil-Kontaktstelle 222 des Verriegelungselements 134 an der Verriegelungselement-Kontaktfläche 224 des Gehäuseteils 112 im Spannzustand der Spannvorrichtung 100 führt dazu, dass die Verriegelungselemente 134 des Verriegelungselementerings 194 im Spannzustand der Spannvorrichtung 100 bei dieser zweiten Ausführungsform einer ringförmigen Flächenbelastung durch das Gehäuseteil 112 unterliegen und dass das Gehäuseteil 112 im Spannzustand der Spannvorrichtung 100 bei dieser Ausführungsform einer ringförmigen Flächenbelastung durch die Verriegelungselemente 134 des Verriegelungselementerings 194 unterliegt.

Durch die Flächenförmigkeit der Gehäuseteil-Kontaktstellen 222 wird die jeweilige lokale Belastung des Gehäuseteils 112 durch die Verriegelungselemente 134 beziehungsweise die jeweilige lokale Belastung der Verriegelungselemente 134 durch das Gehäuseteil 112 im Vergleich zu der Punktbelastung reduziert, welcher das Gehäuseteil 112 unterliegen würde, wenn die Verriegelungselemente 134 als Verriegelungskugeln ausgebildet wären.

Die Verriegelungselemente 134 des Verriegelungselementerings 194 der in den Fig. 12 bis 19 dargestellten zweiten Ausführungsform einer Spannvorrichtung 100 liegen im Spannzustand der Spannvorrichtung 100 also mit einer linienförmigen Spannbolzen-Kontaktstelle 206 an dem Spannbolzen 126 an, mit einer flächenförmigen Kolben-Kontaktstelle 214 an dem Kolben 132 an und mit einer flächenförmigen Gehäuseteil-Kontaktstelle 222 an dem Gehäuseteil 112 der Spannvorrichtung 100 an.

Im Übrigen stimmt die in den Fig. 12 bis 19 dargestellte zweite Ausführungsform einer Spannvorrichtung 100 hinsichtlich Aufbau, Funktion und Herstellungsweise mit der in den Fig. 1 bis 11 dargestellten ersten Ausführungsform überein, auf deren vorstehende Beschreibung insoweit Bezug genommen wird.

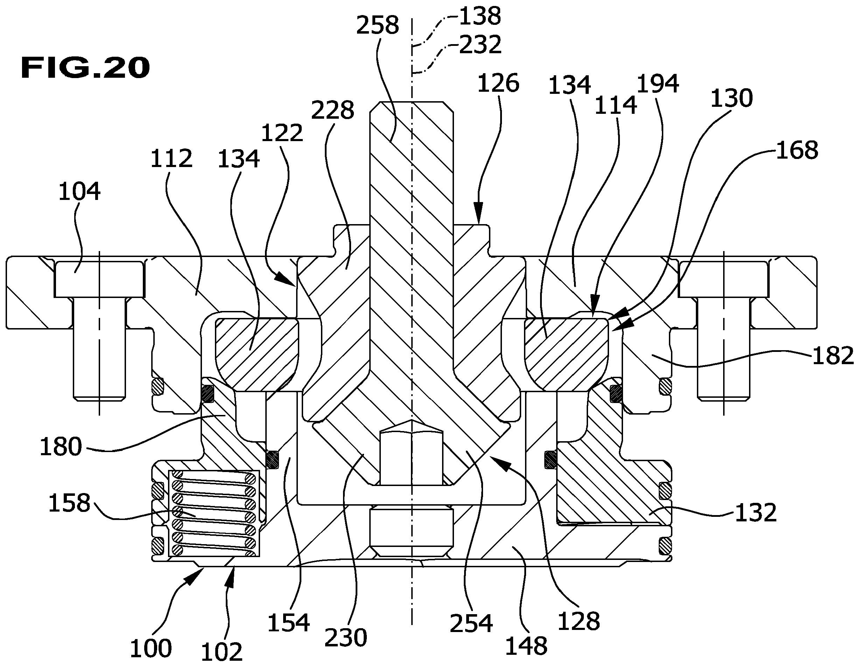

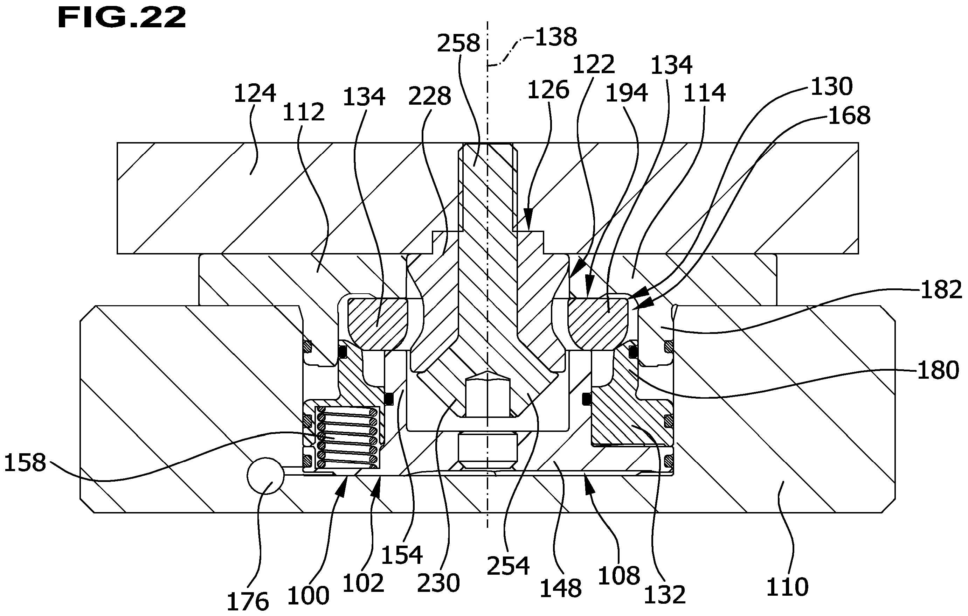

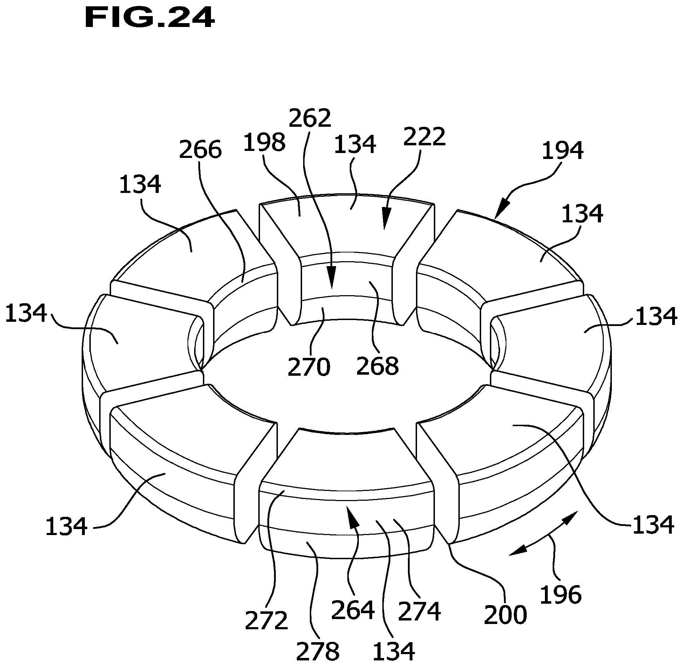

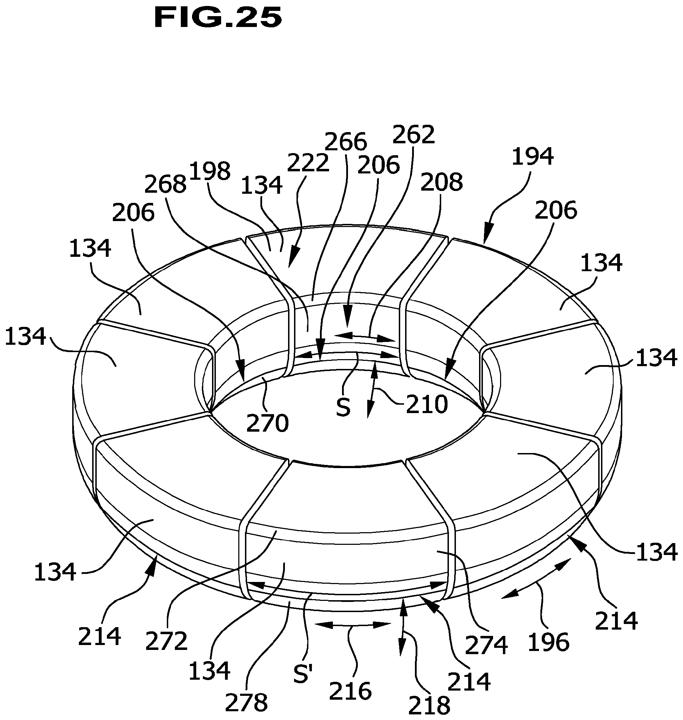

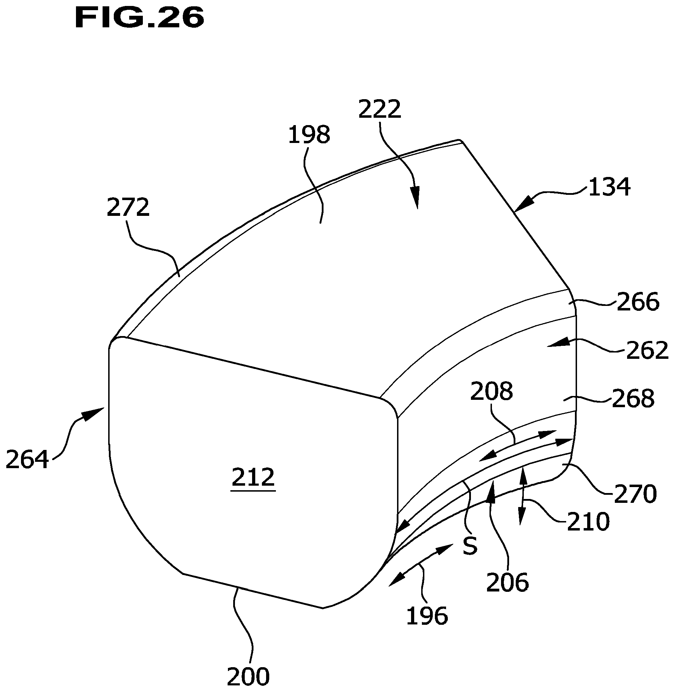

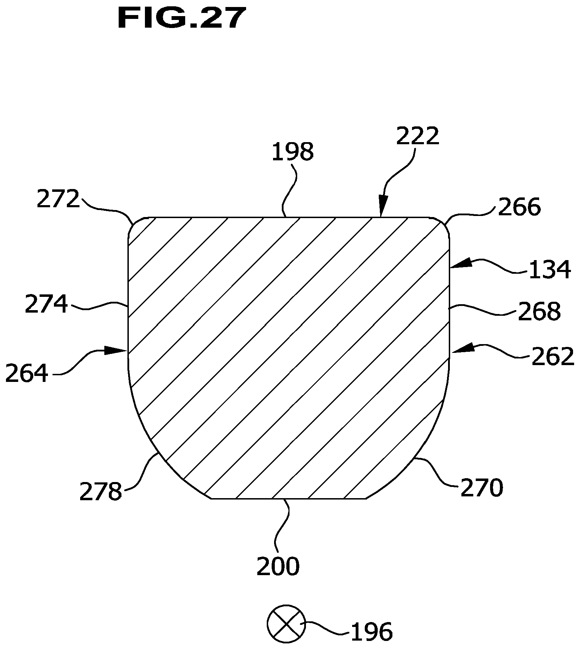

Eine in den Fig. 20 bis 27 dargestellte dritte Ausführungsform einer Spannvorrichtung 100 unterscheidet sich von der in den Fig. 12 bis 19 dargestellten zweiten Ausführungsform durch die Gestaltung der Verriegelungselemente 134 des Verriegelungselementerings 194 der Spannvorrichtung 100.

Bei den Verriegelungselementen 134 dieser dritten Ausführungsform entfällt der konische Abschnitt 276 der äußeren Umfangsfläche 264 der Verriegelungselemente 134 der zweiten Ausführungsform.

Vielmehr geht bei den Verriegelungselementen 134 der dritten Ausführungsform der zylindrische Abschnitt 274 der äußeren Umfangsfläche 264 an seinem dem ersten konvex gekrümmten Abschnitt 272 abgewandten Rand direkt in den zweiten konvex gekrümmten Abschnitt 278 der äußeren Umfangsfläche 264 über.

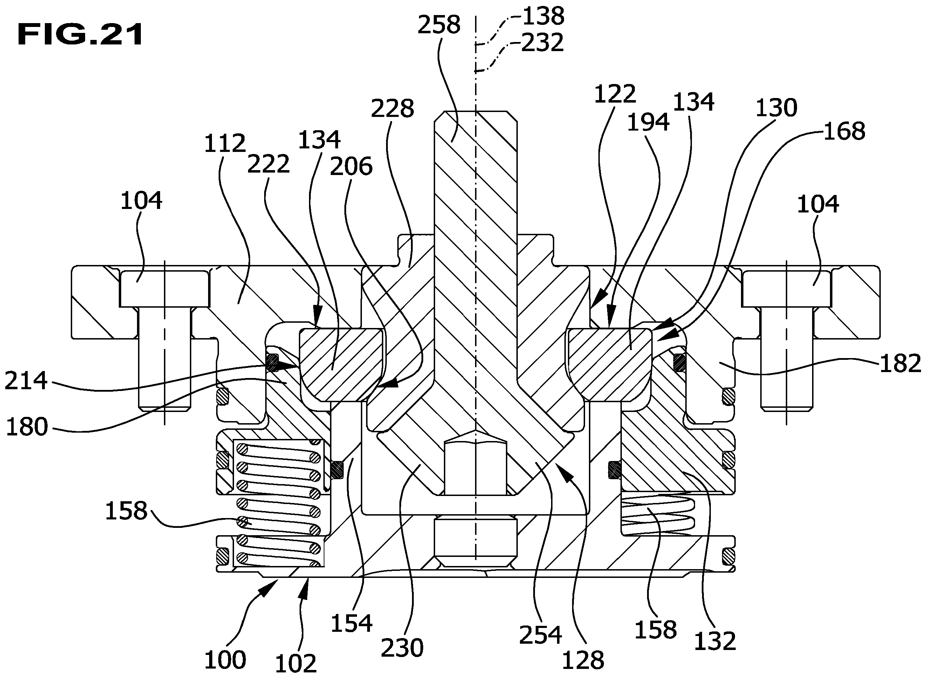

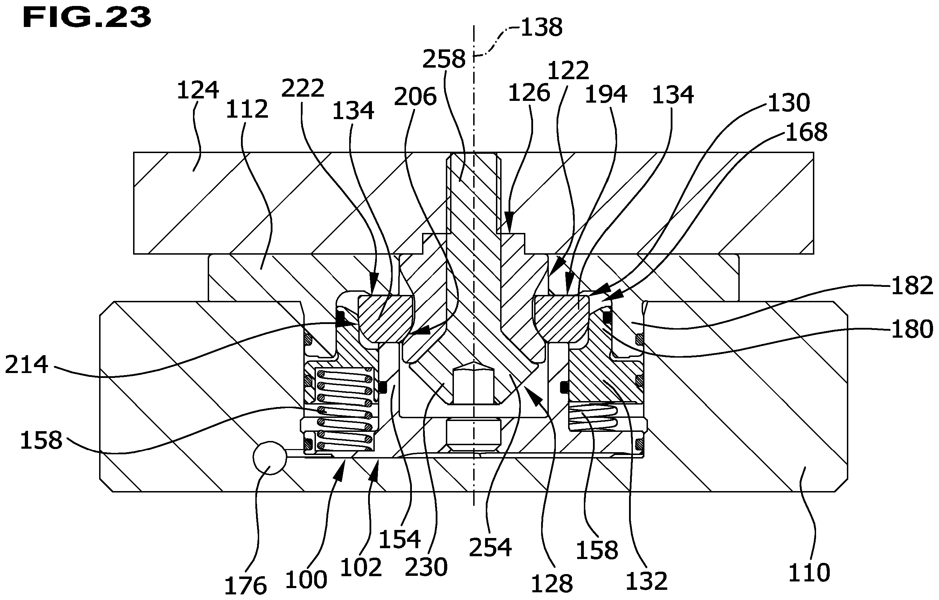

Wie aus den Fig. 21 und 23 zu ersehen ist, liegt in dem Spannzustand der Spannvorrichtung 100 gemäß dieser dritten Ausführungsform jedes der Verriegelungselemente 134 im Bereich des zweiten konvex gekrümmten Abschnitts 278 der äußeren Umfangsfläche 264 des jeweiligen Verriegelungselements 134 lastübertragend an der Verriegelungselement-Kontaktfläche 220 des Kolbens 132 an.

Dabei ist die jeweilige Kolben-Kontaktstelle 214, welche im Bereich des zweiten konvex gekrümmten Abschnitts 278 der äußeren Umfangsfläche 264 des Verriegelungselements 134 angeordnet ist und mit welcher das jeweilige Verriegelungselement 134 in dem Spannzustand an dem Kolben 132 anliegt, linienförmig ausgebildet.

Dies bedeutet, dass die Kolben-Kontaktstelle 214 sich in einer Längsrichtung 208, welche hier der Umfangsrichtung 196 des Verriegelungselements 134 beziehungsweise des Verriegelungselementerings 194 entspricht, über eine große Strecke s erstreckt, welche in der Größenordnung der Erstreckung des jeweiligen Verriegelungselements 134 längs der Umfangsrichtung 196 liegt, während die Ausdehnung der Kolben-Kontaktstelle 214 in einer zu der Längsrichtung 208 senkrecht ausgerichteten Querrichtung 210 im Verhältnis zu der Längserstreckung s der Kolben-Kontaktstelle 214 sehr klein ist.

Vorzugsweise ist der Krümmungsradius der Oberfläche des Verriegelungselements 134 im Bereich der Kolben-Kontaktstelle 214, in einer senkrecht auf der Umfangsrichtung 196 des Verriegelungselements 134 beziehungsweise des Verriegelungselementerings 194 stehenden Ebene 212, maximal 10 mm, besonders bevorzugt maximal 5 mm.

Dies führt zu einer ringförmigen Linienbelastung der Verriegelungselemente 134 des Verriegelungselementerings 194 durch den Kolben 132 beziehungsweise zu einer ringförmigen Linienbelastung des Kolbens 132 durch die Verriegelungselemente 134 des Verriegelungselementerings 194.

Diese Linienbelastung, die über die linienförmige Kolben-Kontaktstelle 214 übertragen wird, ist aufgrund der linearen Ausdehnung der Kolben-Kontaktstelle 214 geringer als bei einer Punktbelastung an einer punktförmigen Kolben-Kontaktstelle, wie sie auftreten würde, wenn die Verriegelungselemente 134 der Spannvorrichtung 100 beispielsweise als Verriegelungskugeln ausgebildet wären.

Im Übrigen stimmt die in den Fig. 20 bis 27 dargestellte dritte Ausführungsform einer Spannvorrichtung 100 hinsichtlich Aufbau, Funktion und Herstellungsweise mit der in den Fig. 12 bis 19 dargestellten zweiten Ausführungsform überein, auf deren vorstehende Beschreibung insoweit Bezug genommen wird.

Bei dieser dritten Ausführungsform einer Spannvorrichtung 100 liegt somit im Spannzustand der Spannvorrichtung 100, welcher in den Fig. 21 und 23 dargestellt ist, jedes der Verriegelungselemente 134 des Verriegelungselementerings 194 über eine linienförmige Kolben-Kontaktstelle 214 an dem Kolben 132, über eine linienförmige Spannbolzen-Kontaktstelle 206 an dem Spannbolzen 126 und über eine flächenförmige Gehäuseteil-Kontaktstelle 222 an dem Gehäuseteil 112 lastübertragend an.

Die Verriegelungselemente 134 gemäß der dritten Ausführungsform sind mit geringerem Fertigungsaufwand herstellbar als die Verriegelungselemente 134 der in den Fig. 1 bis 11 dargestellten ersten Ausführungsform oder der in den Fig. 12 bis 19 dargestellten zweiten Ausführungsform.

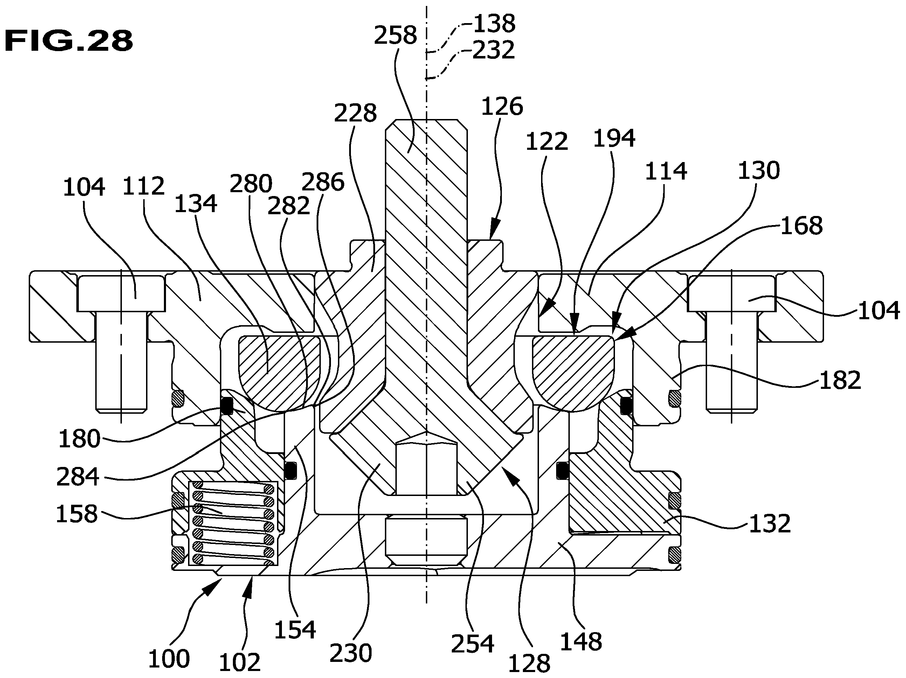

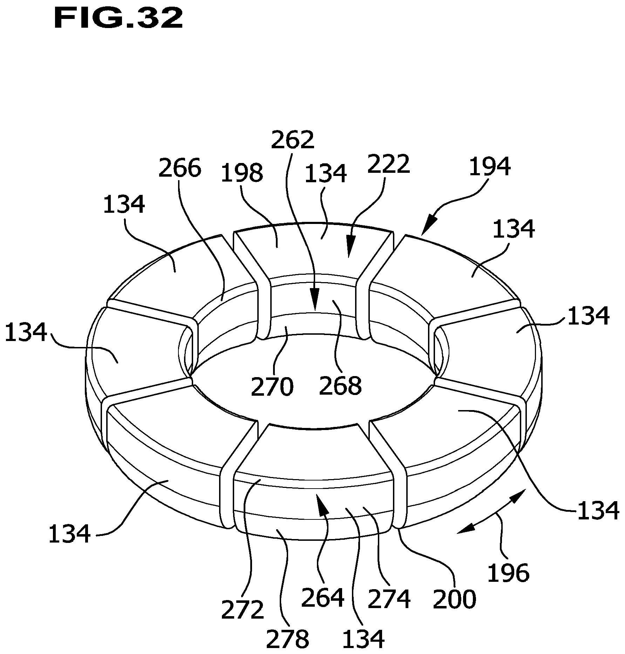

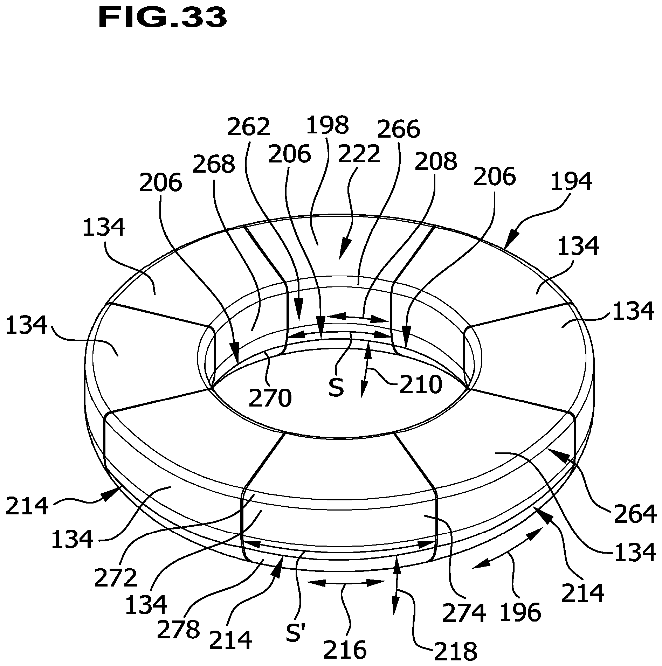

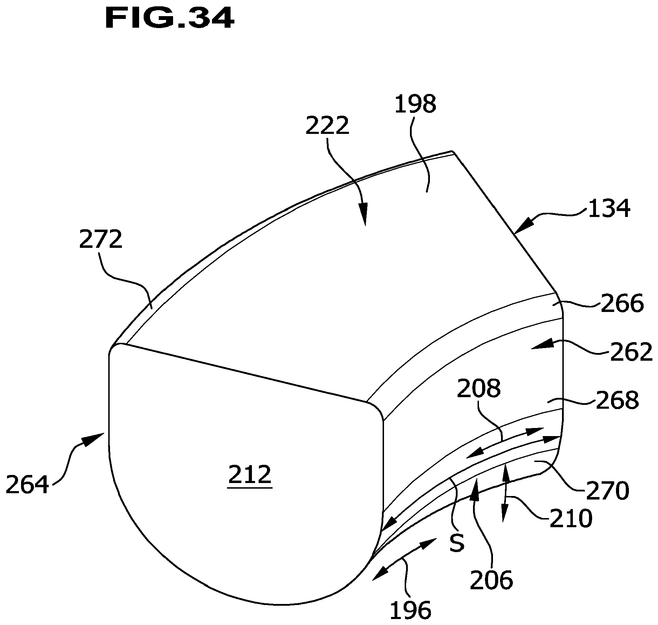

Eine in den Fig. 28 bis 35 dargestellte vierte Ausführungsform einer Spannvorrichtung 100 unterscheidet sich von der in den Fig. 20 bis 27 dargestellten dritten Ausführungsform durch die Gestaltung des Bodens 280 des Verriegelungselementeaufnahmeraums 168 der Spannvorrichtung 100, in welchem die Verriegelungselemente 134 des Verriegelungselementerings 194 der Spannvorrichtung 100 angeordnet sind.

Dieser Boden 280 des Verriegelungselementeaufnahmeraums 168 wird durch den dem Gehäuseteil 112 zugewandten Rand der Verriegelungselementauflage 154 des Bodenteils 148 der Spannvorrichtung 100 gebildet.

Bei allen drei bisher beschriebenen Ausführungsformen von Spannvorrichtungen ist dieser Boden 280 des Verriegelungselementeaufnahmeraums 168 als eine im Wesentlichen ebene ringförmige Fläche ausgebildet, welche senkrecht zu der Längsmittelachse 138 der Spannvorrichtung 100 ausgerichtet ist (siehe insbesondere die Fig. 2 bis 5 für die erste Ausführungsform, die Fig. 12 bis 15 für die zweite Ausführungsform und die Fig. 20 bis 23 für die dritte Ausführungsform einer Spannvorrichtung 100).

Bei den drei bislang beschriebenen Ausführungsformen einer Spannvorrichtung 100 bewegen sich daher die Verriegelungselemente 134 des Verriegelungselementerings 194 beim Übergang von der Freigabestellung in die Spannstellung im Wesentlichen nur in der Radialrichtung der Längsmittelachse 138 von außen nach innen, zu der Längsmittelachse 138 hin, parallel zu dem im Wesentlichen ebenen Boden 280 des Verriegelungselementeaufnahmeraums 268, ohne eine maßgebliche Bewegungskomponente in der Axialrichtung der Längsmittelachse 138, das heißt in der Richtung parallel zur Längsmittelachse 138 der Spannvorrichtung 100.

Wie nun aus den Fig. 28 bis 31 zu ersehen ist, welche die vierte Ausführungsform einer Spannvorrichtung 100 darstellen, ist die Verriegelungselementauflage 154 bei dieser Ausführungsform an ihrem der Längsmittelachse 138 zugewandten inneren Rand mit einem Vorsprung oder Höcker 282 versehen.

Der Boden 280 des Verriegelungselementeaufnahmeraums 168 ist daher bei dieser Ausführungsform nicht im Wesentlichen eben und durchgehend senkrecht zu der Längsmittelachse 138 ausgebildet, sondern (von der Position der Verriegelungselemente 134 aus gesehen) konkav gekrümmt.

Vorzugsweise steigt der Boden 280 von seinem äußeren Rand 284, welcher der Längsmittelachse 138 der Spannvorrichtung 100 abgewandt ist, zu seinem inneren Rand 286, welcher der Längsmittelachse 138 der Spannvorrichtung 100 zugewandt ist, längs der Richtung der Längsmittelachse 138 der Spannvorrichtung 100 hin an, so dass der innere Rand 286 des Bodens 280 des Verriegelungselementeaufnahmeraums 168 näher an dem Gehäuseteil 112, welches eine obere Begrenzung des Verriegelungselementeaufnahmeraums 168 bildet, liegt als der äußere Rand 284 des Bodens 280 des Verriegelungselementeaufnahmeraums 168.

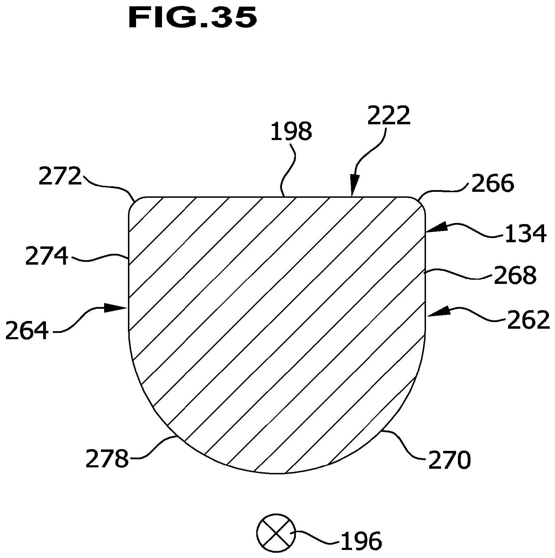

Ferner entfällt bei dieser vierten Ausführungsform die zweite ebene Begrenzungsfläche 200 der Verriegelungselemente 134, so dass der zweite konvex gekrümmte Abschnitt 270 der inneren Umfangsfläche 262 und der zweite konvex gekrümmte Abschnitt 278 der äußeren Umfangsfläche 264 unmittelbar aneinander anschließen (siehe Fig. 35).

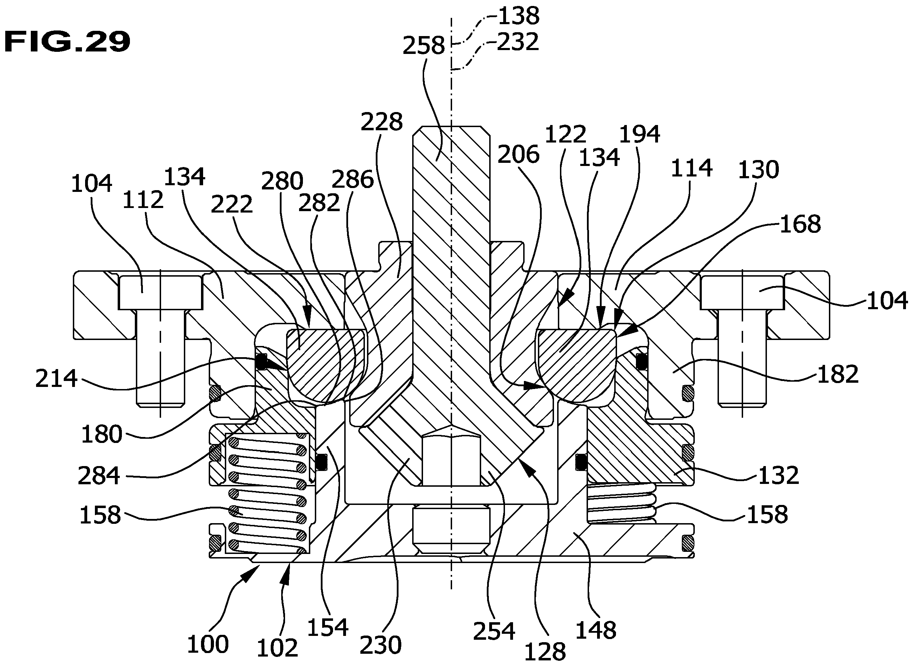

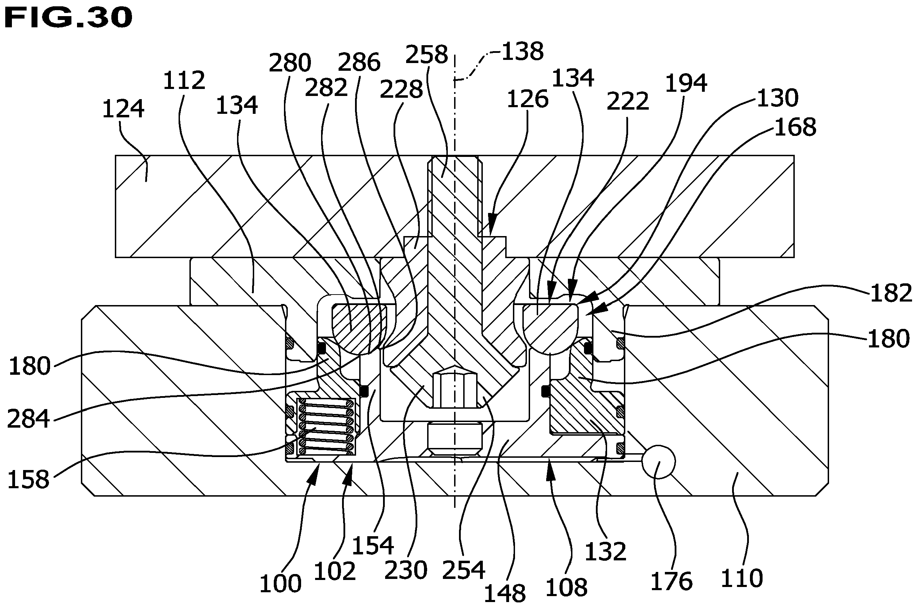

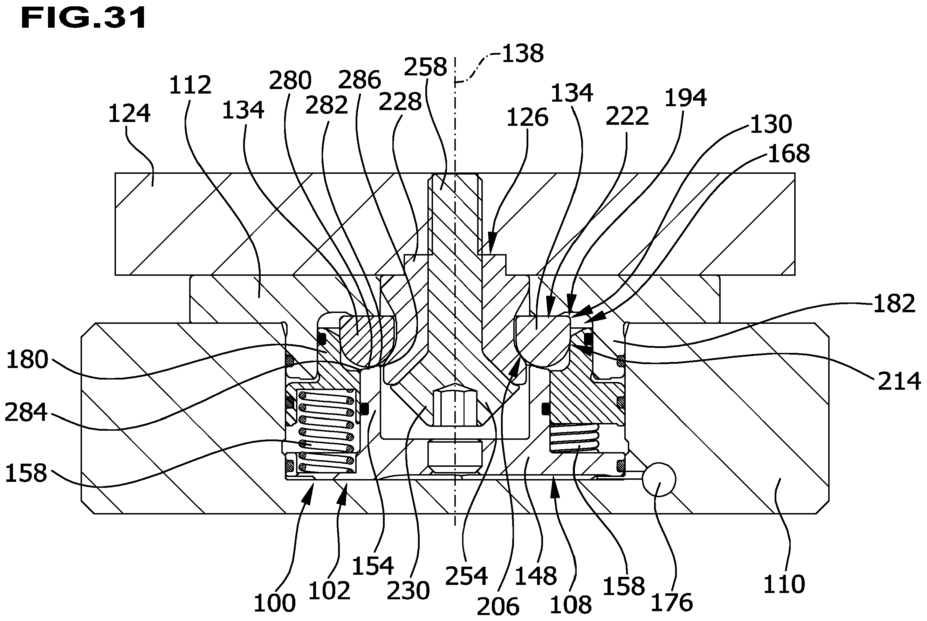

Bei der Bewegung der Verriegelungselemente 134 des Verriegelungselementerings 194 von der in den Fig. 28 und 30 dargestellten Freigabestellung in die in den Fig. 29 und 31 dargestellte Spannstellung laufen die Verriegelungselemente 134 daher gegen den Höcker 282 am Boden 280 des Verriegelungselementeaufnahmeraums 168 an, so dass die Verriegelungselemente 134 sich bei dieser Ausführungsform nicht nur in der Radialrichtung der Längsmittelachse 138 nach innen, zu der Längsmittelachse 138 hin, sondern auch mit einer Bewegungskomponente in der Axialrichtung der Längsmittelachse 138, das heißt parallel zu der Längsmittelachse 138, zu dem Gehäuseteil 112 hin, an welchem die Verriegelungselemente 134 im in den Fig. 29 und 31 dargestellten Spannzustand der Spannvorrichtung 100 lastübertragend anliegen.

Durch den Höcker 282 am inneren Rand 286 des Bodens 280 des Verriegelungselementeaufnahmeraums 168 wird die Beweglichkeit der Verriegelungselemente 134 in Richtung zu der Längsmittelachse 138 der Spannvorrichtung 100 hin begrenzt.

Es ist daher insbesondere ausgeschlossen, dass die Verriegelungselemente 134 bei Abwesenheit eines Spannbolzens 126 in der Spannbolzenaufnahme 128 in die Spannbolzenaufnahme 128 hinein gelangen könnten.

Ferner wird durch diese Gestaltung des Bodens 280 des Verriegelungselementeaufnahmeraums 168 eine Verdrehung der Verriegelungselemente 134 begrenzt.

Dafür wird ein im Vergleich zu der zweiten Ausführungsform und der dritten Ausführungsform einer Spannvorrichtung 100 höherer Fertigungsaufwand in Kauf genommen.

Im Übrigen stimmt die in den Fig. 28 bis 35 dargestellte vierte Ausführungsform einer Spannvorrichtung 100 hinsichtlich Aufbau, Funktion und Herstellungsweise mit der in den Fig. 20 bis 27 dargestellten dritten Ausführungsform überein, auf deren vorstehende Beschreibung insoweit Bezug genommen wird.

Bei dieser vierten Ausführungsform einer Spannvorrichtung 100 liegt somit im Spannzustand der Spannvorrichtung 100, welcher in den Fig. 29 und 31 dargestellt ist, jedes der Verriegelungselemente 134 des Verriegelungselementerings 194 über eine linienförmige Kolben-Kontaktstelle 214 an dem Kolben 132, über eine linienförmige Spannbolzen-Kontaktstelle 206 an dem Spannbolzen 126 und über eine flächenförmige Gehäuseteil-Kontaktstelle 222 an dem Gehäuseteil 112 lastübertragend an.

Grundsätzlich kann die vorstehend beschriebene Ausbildung des Bodens 280 des Verriegelungselementeaufnahmeraums 168, bei welcher der Boden 280 nicht durchgehend senkrecht zu der Längsmittelachse 138 der Spannvorrichtung 100 ausgerichtet ist, unabhängig von der Gestaltung der Verriegelungselemente 134 verwendet werden.

Insbesondere kann diese Ausgestaltung des Bodens 280 des Verriegelungselementeaufnahmeraums 168 also auch mit der Gestaltung der Verriegelungselemente 134 bei der in den Fig. 12 bis 19 dargestellten zweiten Ausführungsform kombiniert werden.

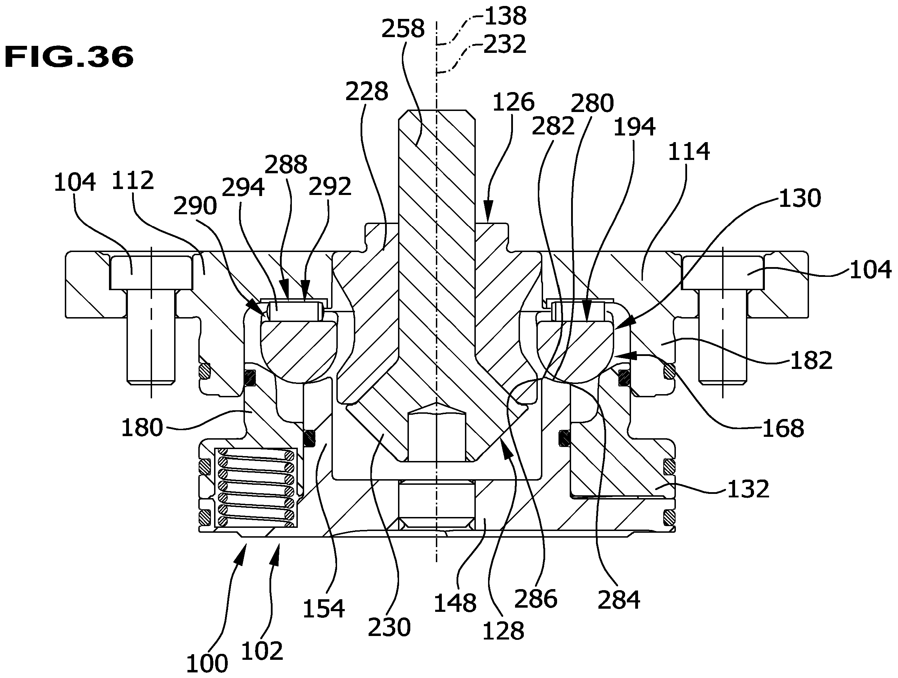

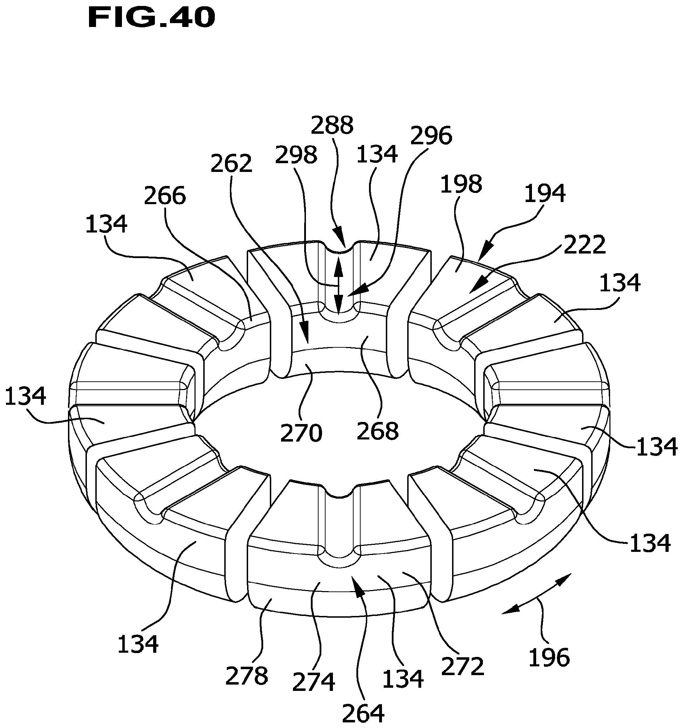

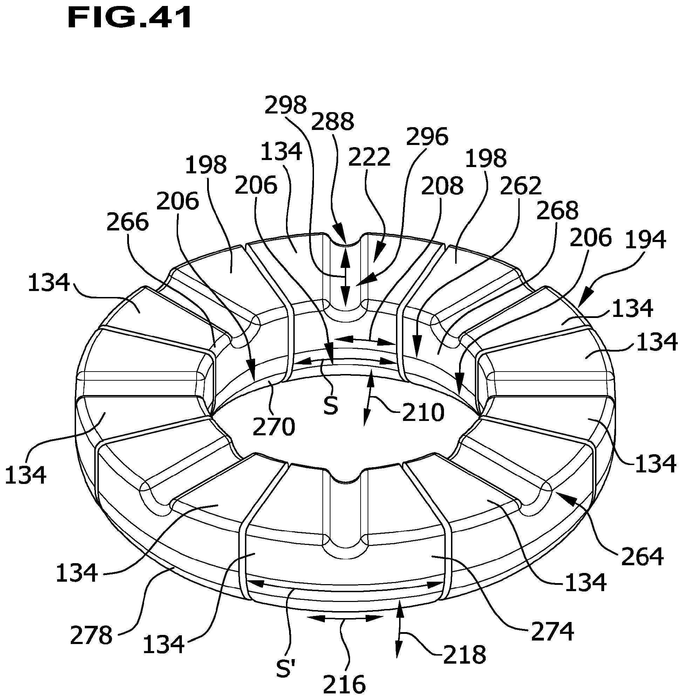

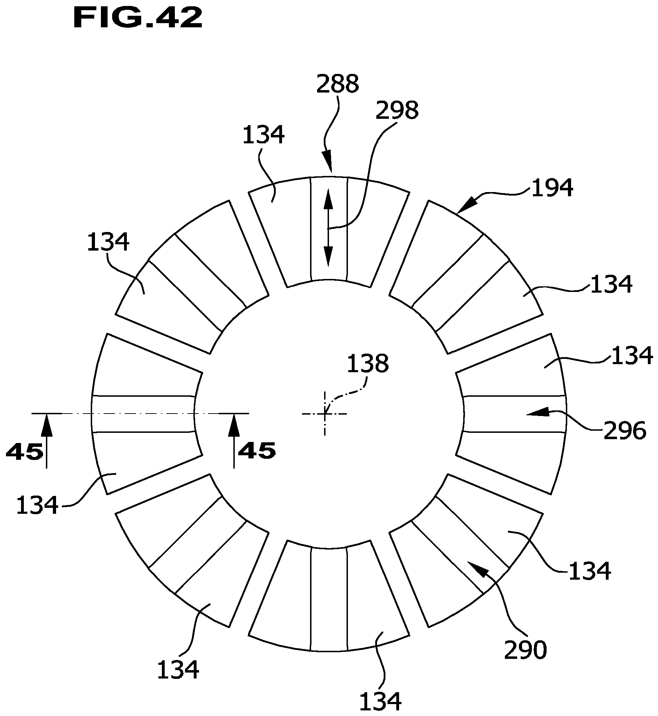

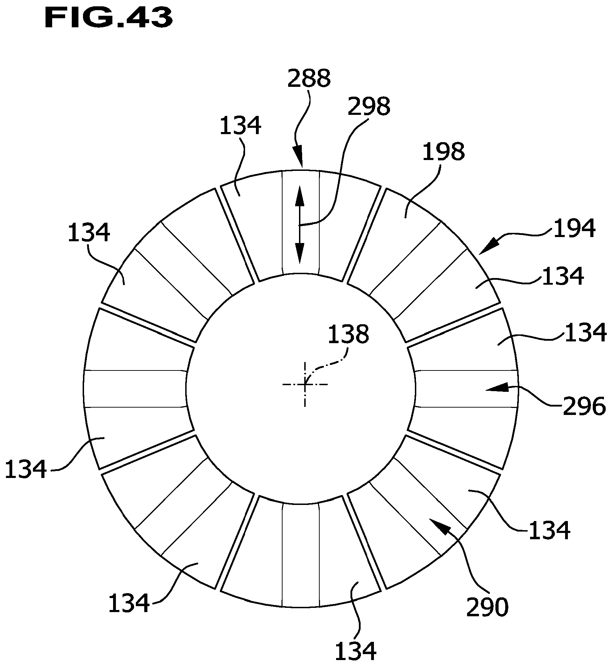

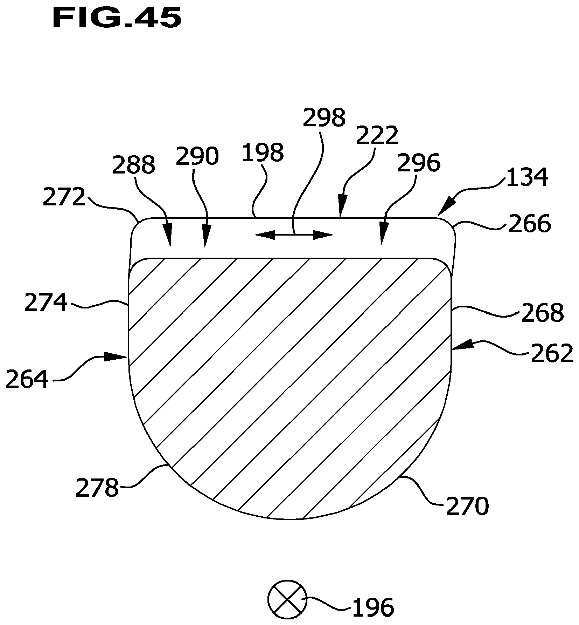

Eine in den Fig. 36 bis 45 dargestellte fünfte Ausführungsform einer Spannvorrichtung 100 unterscheidet sich von der in den Fig. 28 bis 35 dargestellten vierten Ausführungsform dadurch, dass die Verriegelungselemente 134 des Verriegelungselementerings 194 der Spannvorrichtung 100 mittels einer Verdrehsicherung 288 in vorgegebenen Winkelpositionen bezüglich der Längsmittelachse 138 relativ zu dem Gehäuseteil 112 gesichert sind.

Wie am besten aus den Fig. 36 bis 39 sowie 44 und 45 zu ersehen ist, umfasst diese Verdrehsicherung 288 für jedes Verriegelungselement 134 jeweils eine verriegelungselementseitige Ausnehmung 290, eine gehäuseteilseitige Ausnehmung 292 und ein Kopplungselement 294, welches sowohl in die jeweilige verriegelungselementseitige Ausnehmung 290 als auch die jeweilige gehäuseteilseitige Ausnehmung 292 eingreift und so das betreffende Verriegelungselement 134 in einer durch die gehäuseteilseitige Ausnehmung 292 festgelegten Winkelposition bezüglich der Längsmittelachse 138 der Spannvorrichtung 100 relativ zu dem Gehäuseteil 112 sichert.

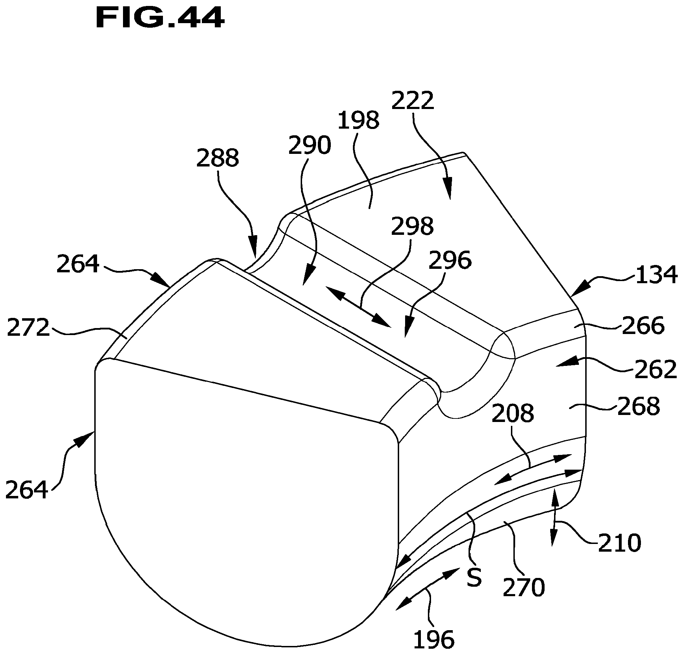

Wie aus Fig. 44 zu ersehen ist, kann die verriegelungselementseitige Ausnehmung 290 insbesondere als eine Nut 296 ausgebildet sein, welche in der ersten ebenen Begrenzungsfläche 198 des jeweiligen Verriegelungselements 134 ausgebildet ist und sich vorzugsweise von der äußeren Umfangsfläche 264 bis zu der inneren Umfangsfläche 262 erstreckt.

Diese Nut 296 weist vorzugsweise einen längs ihrer Längsrichtung 298 im Wesentlichen konstanten Querschnitt auf.

Dieser Querschnitt kann insbesondere die Form eines Kreissektors, insbesondere eines Halbkreises, oder die Form eines Kreissegmentes aufweisen.

In entsprechender Weise kann auch die jeweils zugeordnete gehäuseteilseitige Ausnehmung 292 die Form einer Nut aufweisen, deren Längsrichtung eine Radialrichtung der Längsmittelachse 138 der Spannvorrichtung 100 ist.

Auch diese Nut kann einen längs der Längsrichtung der Nut im Wesentlichen konstanten Querschnitt aufweisen.

Der Querschnitt dieser Nut kann beispielsweise die Form eines Kreissektors, insbesondere eines Halbkreises, oder die Form eines Kreissegments aufweisen.

Das Kopplungselement 294, welches zum Teil in die verriegelungselementseitige Ausnehmung 290 und zum Teil in die gehäuseteilseitige Ausnehmung 292 eingreift, weist vorzugsweise Abschnitte auf, welche zu der verriegelungselementseitigen Ausnehmung 290 beziehungsweise zu der gehäuseteilseitigen Ausnehmung 292 im Wesentlichen komplementär ausgebildet sind.

Beispielsweise kann vorgesehen sein, dass das Kopplungselement 294 als ein Zylinderstift ausgebildet ist.

Das Kopplungselement 294 sorgt für eine formschlüssige Kopplung zwischen dem jeweils zugeordneten Verriegelungselement 134 des Verriegelungselementerings 194 und der jeweils zugeordneten gehäuseteilseitigen Ausnehmung 292 des Gehäuseteils 112, so dass das Verriegelungselement 134 nur in der Radialrichtung der Längsmittelachse 138 und gegebenenfalls in der Axialrichtung der Längsmittelachse 138 relativ zu dem Gehäuseteil 112 bewegbar ist, aber nicht längs der Umfangsrichtung der Längsmittelachse 138, welche mit der Umfangsrichtung 196 der Verriegelungselemente 134 übereinstimmt.

Auf diese Weise sind die Winkelpositionen der Verriegelungselemente 134 des Verriegelungselementerings 194 in Bezug auf die Längsmittelachse 138 relativ zu dem Gehäuseteil 112 durch die Kopplungselemente 294 der Verdrehsicherung 288 fixiert.

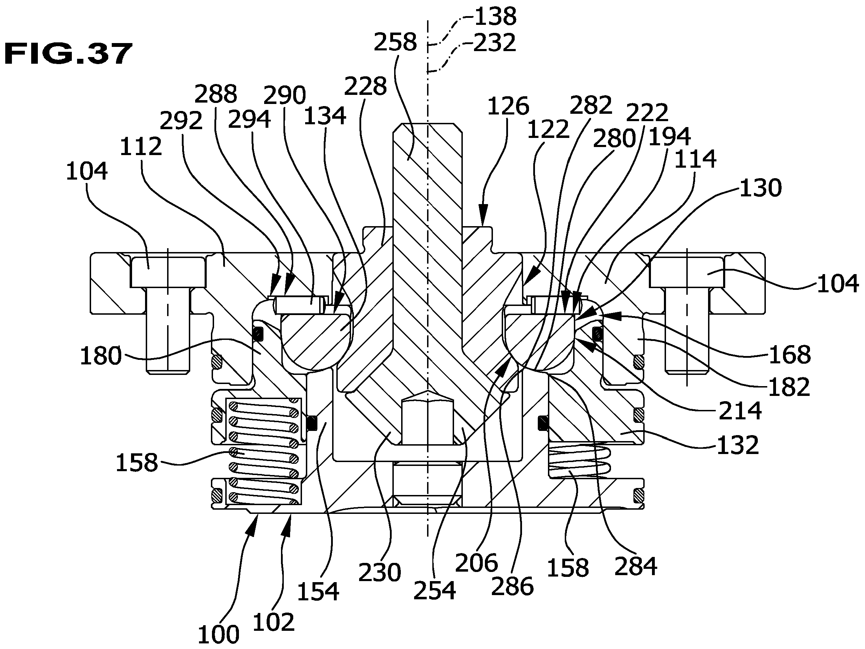

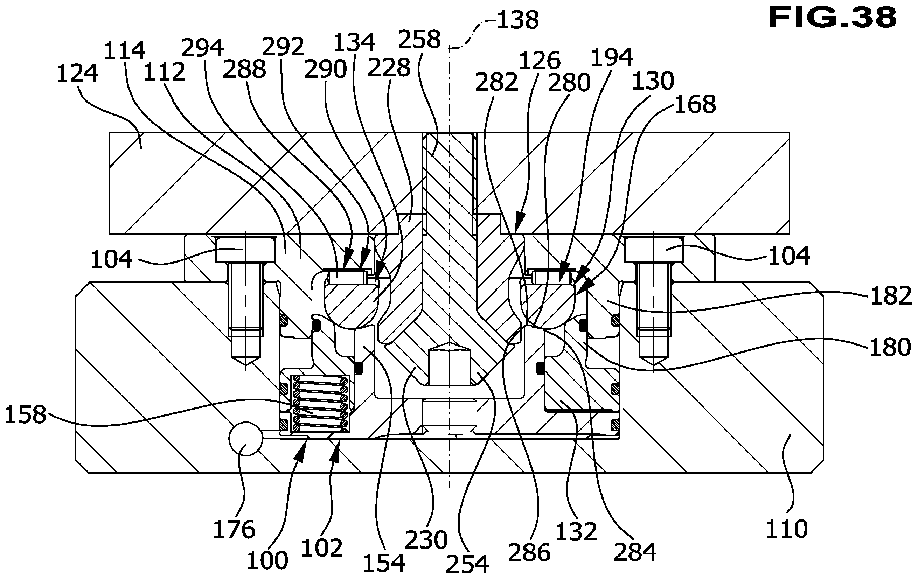

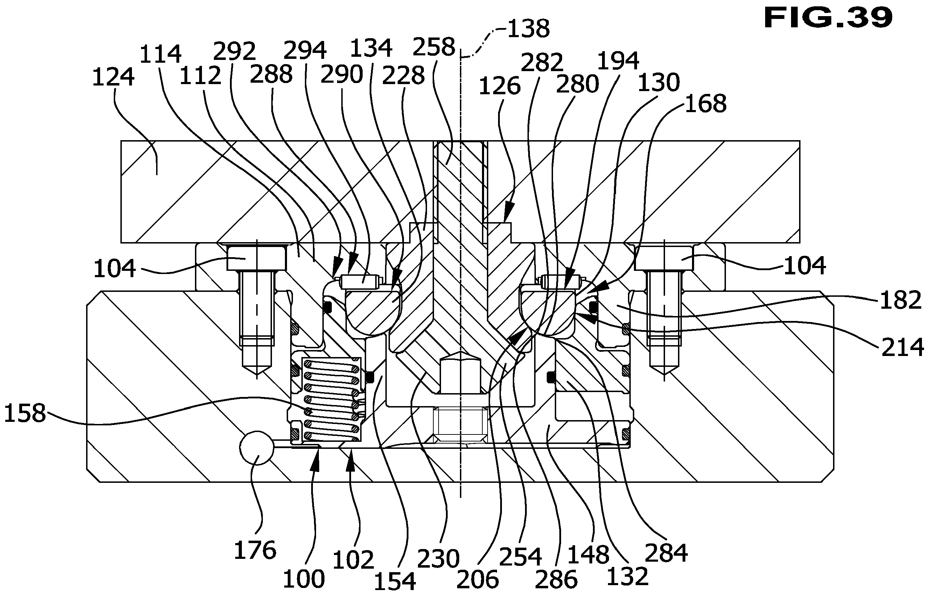

Wie aus den Fig. 36 bis 39 zu ersehen ist, können sich die Verriegelungselemente 134 relativ zu dem jeweils zugeordneten Kopplungselement 294 und relativ zu der jeweils zugeordneten gehäuseteilseitigen Ausnehmung 292 längs der Radialrichtung der Längsmittelachse 138 der Spannvorrichtung 100 bewegen, wenn die Spannvorrichtung 100 von dem in den Fig. 36 und 38 dargestellten Freigabezustand in den in den Fig. 37 und 39 dargestellten Spannzustand der Spannvorrichtung 100 überführt wird.

Im Übrigen stimmt die in den Fig. 36 bis 45 dargestellte fünfte Ausführungsform einer Spannvorrichtung 100 hinsichtlich Aufbau, Funktion und Herstellungsweise mit der in den Fig. 28 bis 35 dargestellten vierten Ausführungsform überein, auf deren vorstehende Beschreibung insoweit Bezug genommen wird.

Bei dieser fünften Ausführungsform einer Spannvorrichtung 100 liegt somit im Spannzustand der Spannvorrichtung 100, welcher in den Fig. 37 und 39 dargestellt ist, jedes der Verriegelungselemente 134 des Verriegelungselementerings 194 über eine linienförmige Kolben-Kontaktstelle 214 an dem Kolben 132, über eine linienförmige Spannbolzen-Kontaktstelle 206 an dem Spannbolzen 126 und über eine flächenförmige Gehäuseteil-Kontaktstelle 222 (nämlich in den Bereichen der ersten ebenen Begrenzungsfläche 198 der Verriegelungselemente 134, welche außerhalb der jeweiligen verriegelungselementseitigen Ausnehmung 290 liegen) an dem Gehäuseteil 112 lastübertragend an.

Grundsätzlich ist die vorstehend im Zusammenhang mit der in den Fig. 36 bis 45 dargestellten fünften Ausführungsform beschriebene Verdrehsicherung 288 der Verriegelungselemente 134 aber auch mit jeder der anderen vorstehend beschriebenen Ausführungsformen kombinierbar, insbesondere mit der in den Fig. 1 bis 11 dargestellten ersten Ausführungsform, der in den Fig. 12 bis 19 dargestellten zweiten Ausführungsform und der in den Fig. 20 bis 27 dargestellten dritten Ausführungsform einer Spannvorrichtung 100.

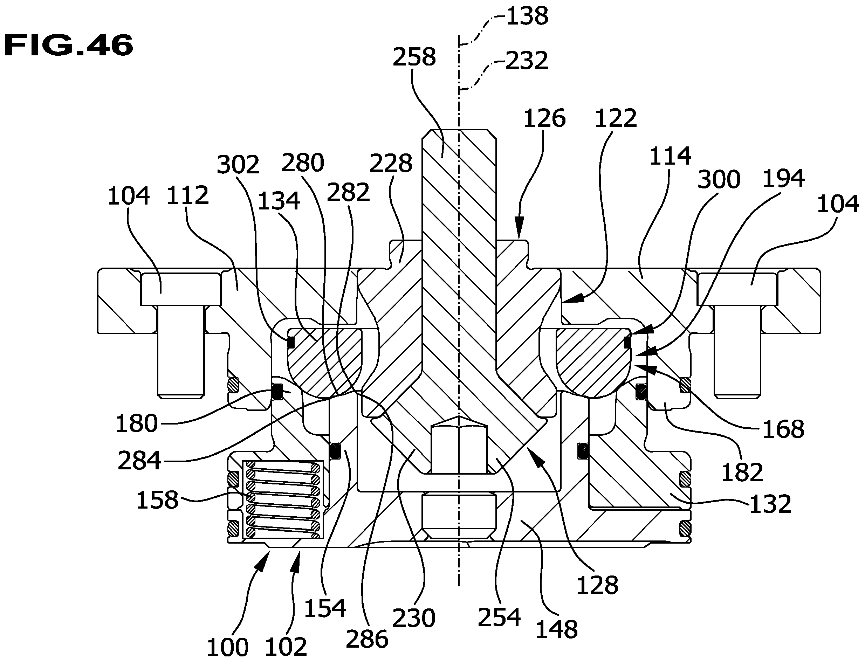

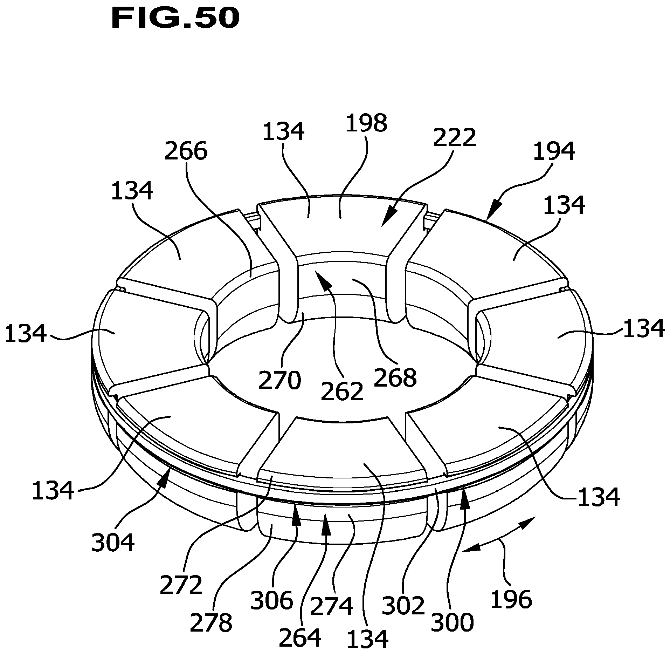

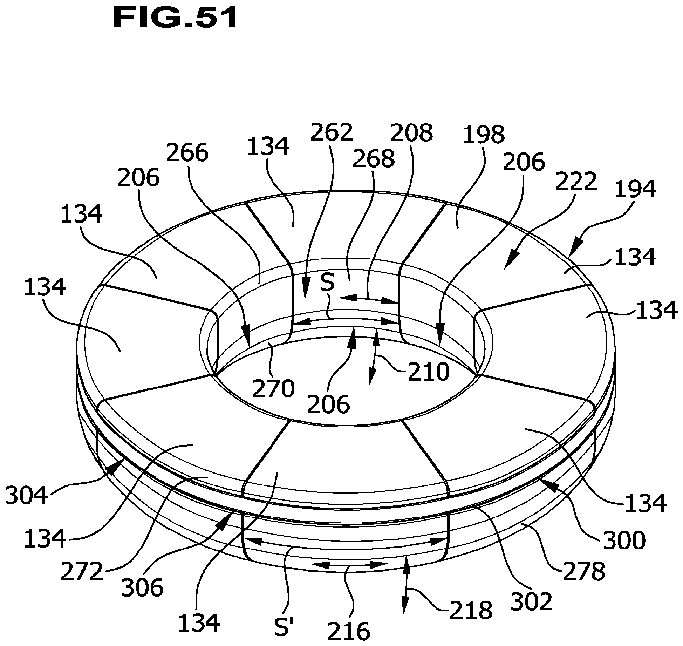

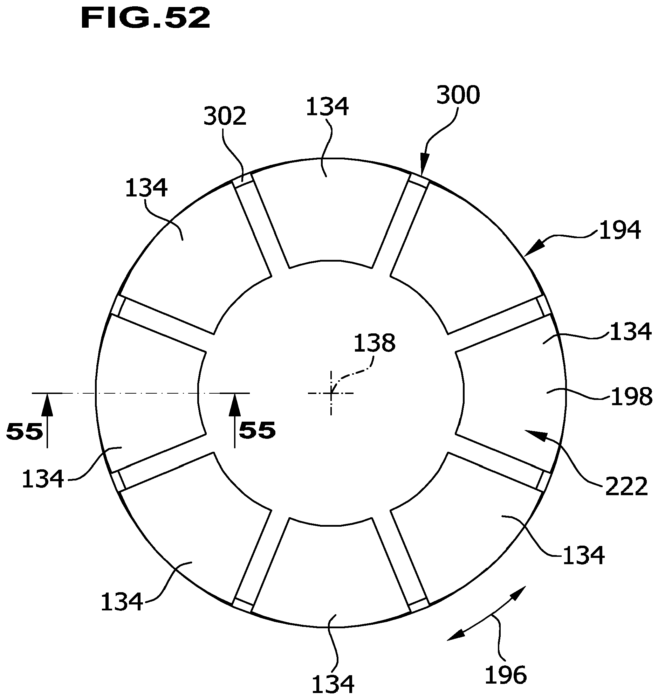

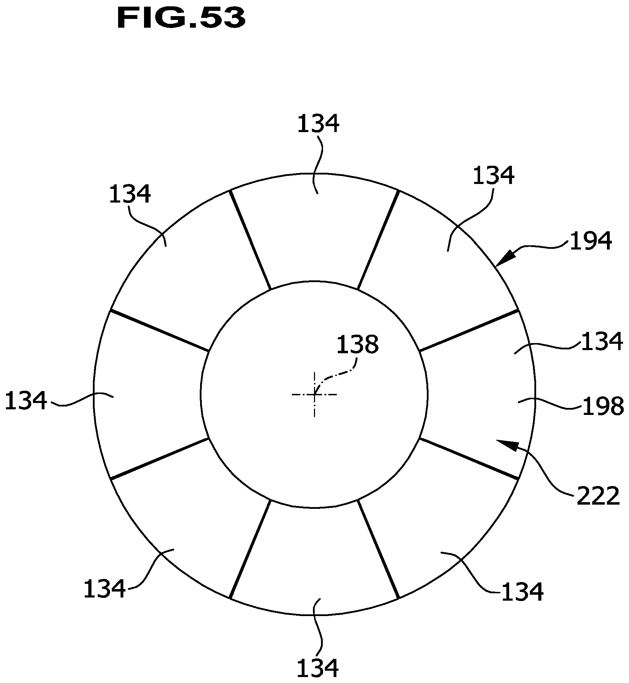

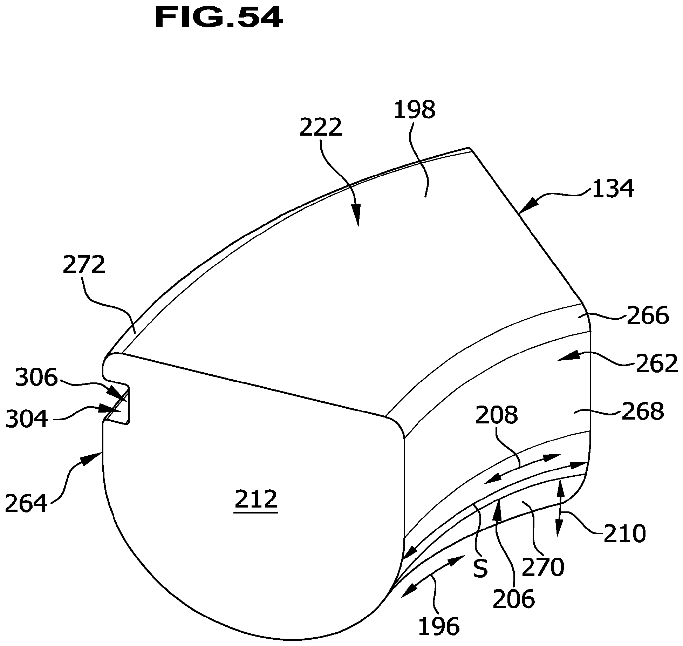

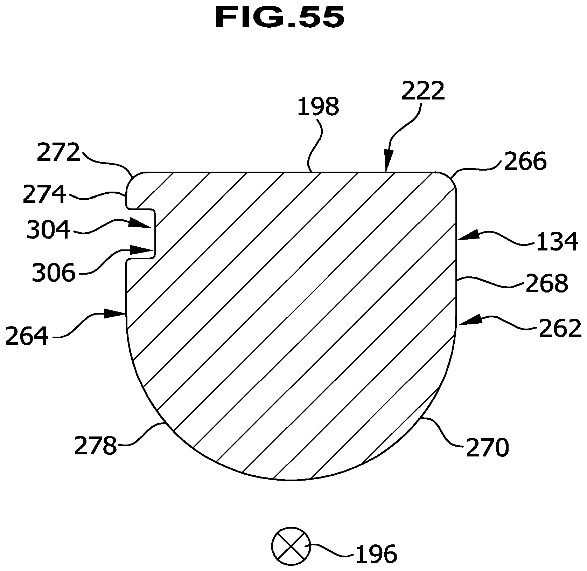

Eine in den Fig. 46 bis 55 dargestellte sechste Ausführungsform einer Spannvorrichtung 100 unterscheidet sich von der in den Fig. 28 bis 35 dargestellten vierten Ausführungsform dadurch, dass die Spannvorrichtung 100 bei dieser Ausführungsform eine Vorspanneinrichtung 300 umfasst, welche die Verriegelungselemente 134 in Richtung auf die Längsmittelachse 138 der Spannvorrichtung 100 zu elastisch vorspannt.

Wie am besten aus den Fig. 46 bis 51 zu ersehen ist, umfasst die Vorspanneinrichtung 300 ein Federelement 302, welches alle Verriegelungselemente 134 des Verriegelungselementerings 194 ringförmig umgreift.

Das Federelement 302 ist vorzugsweise an der äußeren Umfangsfläche 264 der Verriegelungselemente 134 angeordnet.

Insbesondere kann vorgesehen sein, dass an der äußeren Umfangsfläche 264 jedes Verriegelungselement 134 eine Federelementaufnahme 304 vorgesehen ist, welche jeweils einen Abschnitt des Federelements 302 aufnimmt.

Die Federelementaufnahme 304 kann beispielsweise als eine Nut 306 ausgebildet sein, welche längs der Umfangsrichtung der Längsmittelachse 138 verläuft.

Längs der Umfangsrichtung weist die Nut 306 vorzugsweise einen im Wesentlichen konstanten Querschnitt auf.

Besonders günstig ist es, wenn der Querschnitt der Nut 306 komplementär zu dem Querschnitt des Federelements 302 (senkrecht zur Umfangsrichtung der Längsmittelachse 138 genommen) ausgebildet ist.

Auf diese Weise ist es möglich, dass das Federelement 302 nicht in der Radialrichtung der Längsmittelachse 138 nach außen über die äußere Umfangsfläche 264 des jeweiligen Verriegelungselements 134 übersteht.

Durch das Federelement 302 werden die Verriegelungselemente 134 elastisch in der Radialrichtung der Längsmittelachse 138 der Spannvorrichtung 100 nach innen, in Richtung auf die Spannbolzen 128 zu, vorgespannt.

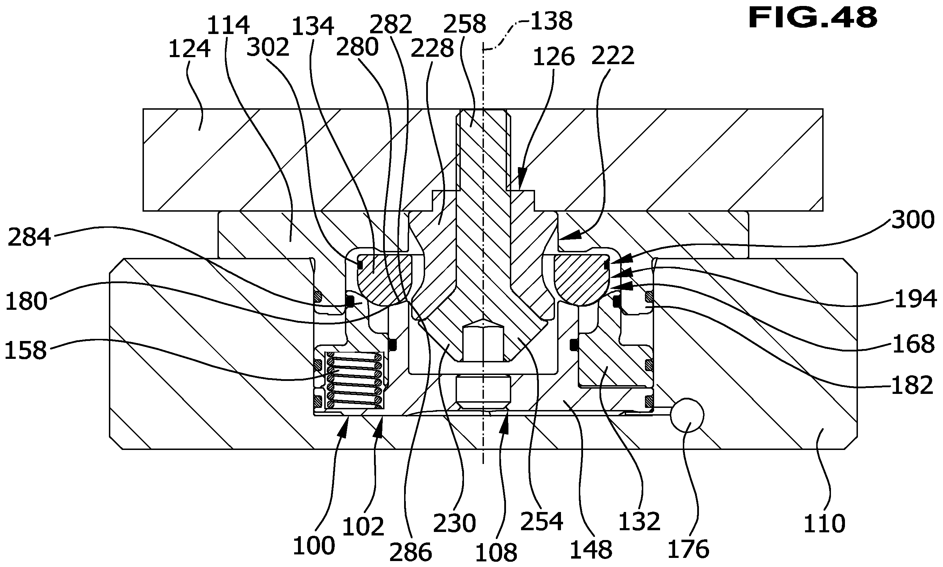

Hierdurch werden die Verriegelungselemente 134 auch in dem in den Fig. 46 und 48 dargestellten Freigabezustand der Spannvorrichtung 100 in Richtung auf die Längsmittelachse 138 zu nach innen gezogen.

Die Abstände zwischen den in der Umfangsrichtung der Längsmittelachse 138 aufeinanderfolgenden Verriegelungselemente 134 sind hierdurch kleiner als ohne die Einwirkung des Federelements 302.

Hierdurch wird ein Eindringen von Schmutz in den Bereich zwischen den Verriegelungselementen 134 des Verriegelungselementerings 194 erschwert.

Ferner ist ein in die Spannbolzenaufnahme 128 der Spannvorrichtung 100 eingeführter Spannbolzen 126 schon vor dem Einleiten eines Spannvorgangs, das heißt vor dem Verdrängen der Verriegelungselemente 134 durch den Verdrängungsteil 180 des Kolbens 132, durch Formschluss mit den Verriegelungselementen 134 in der Spannbolzenaufnahme 128 gehalten.

Beim Einführen des Spannbolzens 126 in die Spannbolzenaufnahme 128 muss die elastische Rückstellkraft des Federelements 302 der Vorspanneinrichtung 300 überwunden werden, und nach Überwindung dieser elastischen Rückstellkraft rastet der Spannbolzen 126 hinter den Verriegelungselementen 134 ein.

Das Federelement 302 der Vorspanneinrichtung 300 kann aus einem geeigneten elastischen Material gebildet sein.

Das Material, aus welchem das Federelement 302 gebildet wird, kann beispielsweise ein Elastomermaterial oder ein federelastisches metallisches Material sein.

Im Übrigen stimmt die in den Fig. 46 bis 55 dargestellte sechste Ausführungsform einer Spannvorrichtung 100 hinsichtlich Aufbau, Funktion und Herstellungsweise mit der in den Fig. 28 bis 35 dargestellten vierten Ausführungsform überein, auf deren vorstehende Beschreibung insoweit Bezug genommen wird.

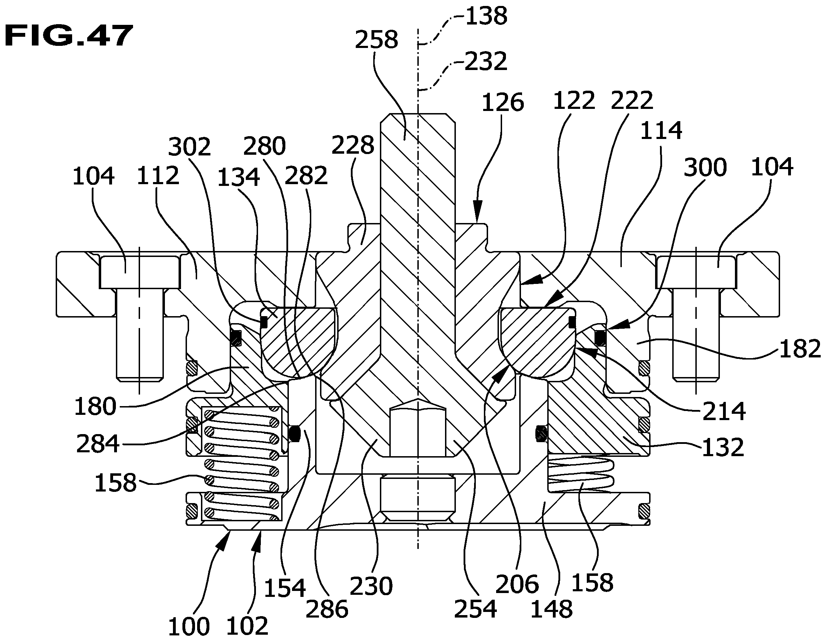

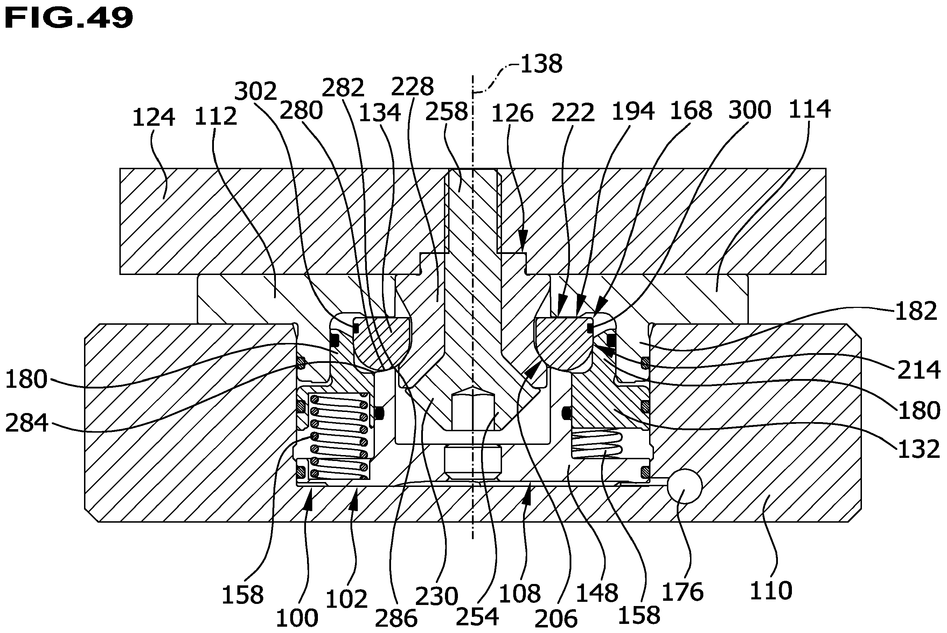

Bei dieser sechsten Ausführungsform einer Spannvorrichtung 100 liegt somit im Spannzustand der Spannvorrichtung 100, welcher in den Fig. 47 und 49 dargestellt ist, jedes der Verriegelungselemente 134 des Verriegelungselementerings 194 über eine linienförmige Kolben-Kontaktstelle 214 an dem Kolben 132, über eine linienförmige Spannbolzen-Kontaktstelle 206 an dem Spannbolzen 126 und über eine flächenförmige Gehäuseteil-Kontaktstelle 222 an dem Gehäuseteil 112 lastübertragend an.

Die vorstehend im Zusammenhang mit der in den Fig. 46 bis 55 dargestellten sechsten Ausführungsform beschriebene Vorspanneinrichtung 300 mit Federelement 302 kann aber auch bei der in den Fig. 1 bis 11 dargestellten ersten Ausführungsform, bei der in den Fig. 12 bis 19 dargestellten zweiten Ausführungsform, bei der in den Fig. 20 bis 27 dargestellten dritten Ausführungsform oder bei der in den Fig. 36 bis 45 dargestellten fünften Ausführungsform verwendet werden.

## Patentansprüche

1. Spannvorrichtung zum Einspannen eines an einem Werkstück oder an einem Werkstückträger (124) angeordneten Spannbolzens (126),
wobei die Spannvorrichtung (100) Verriegelungselemente (134), einen Kolben (132) zum Bewegen der Verriegelungselemente (134) zu einer Längsmittelachse (138) der Spannvorrichtung (100) hin und ein Gehäuseteil (112) umfasst,
wobei in einem Spannzustand der Spannvorrichtung (100), in welchem ein Spannbolzen (126) in der Spannvorrichtung (100) verriegelt ist, jedes der Verriegelungselemente (134) an dem Kolben (132), an dem Gehäuseteil (112) und an dem Spannbolzen (126) an jeweils einer Kontaktstelle anliegt, wobei die jeweilige Gehäuse-Kontaktstelle (222), mit welcher jedes Verriegelungselement (134) im Spannzustand an dem Gehäuseteil (112) anliegt, flächenförmig ist,
**dadurch gekennzeichnet,**
**dass** die jeweilige Spannbolzen-Kontaktstelle (206), mit welcher jedes Verriegelungselement (134) in dem Spannzustand an dem Spannbolzen (126) anliegt, linienförmig ist.

2. Spannvorrichtung nach Anspruch 1, **dadurch gekennzeichnet, dass** die jeweilige Kolben-Kontaktstelle (214), mit welcher jedes Verriegelungselement (134) in dem Spannzustand an dem Kolben (132) anliegt, linienförmig ist.

3. Spannvorrichtung nach Anspruch 1, **dadurch gekennzeichnet, dass** die jeweilige Kolben-Kontaktstelle (214), mit welcher jedes Verriegelungselement (134) in dem Spannzustand an dem Kolben (132) anliegt, flächenförmig ist.

4. Spannvorrichtung nach einem der Ansprüche 1 bis 3, **dadurch gekennzeichnet, dass** das Gehäuseteil (112), an welchem jedes Verriegelungselement (134) im Spannzustand mit einer jeweiligen Gehäuseteil-Kontaktstelle (222) anliegt, ein Gehäusedeckel (114) der Spannvorrichtung (100) ist.

5. Spannvorrichtung nach einem der Ansprüche 1 bis 4, **dadurch gekennzeichnet, dass** jedes der Verriegelungselemente (134) als ein Torus-Segment ausgebildet ist.

6. Spannvorrichtung nach einem der Ansprüche 1 bis 5, **dadurch gekennzeichnet, dass** die Verriegelungselemente (134) in einem Verriegelungselementeaufnahmeraum (168) der Spannvorrichtung (100) aufgenommen sind und längs einer Umfangsrichtung des Verriegelungselementeaufnahmeraums (168) beweglich sind.

7. Spannvorrichtung nach einem der Ansprüche 1 bis 6, **dadurch gekennzeichnet, dass** jedes der Verriegelungselemente (134) eine äußere Umfangsfläche (264) aufweist, welche einen konischen Abschnitt (276) umfasst.

8. Spannvorrichtung nach Anspruch 7, **dadurch gekennzeichnet, dass** der konische Abschnitt (276) der äußeren Umfangsfläche (264) des jeweiligen Verriegelungselements (134) gegenüber der Längsmittelachse (138) der Spannvorrichtung (100) um einen Winkel (α) von weniger als 10° geneigt ist.

9. Spannvorrichtung nach einem der Ansprüche 1 bis 8, **dadurch gekennzeichnet, dass** ein Boden (280) eines Verriegelungselementeaufnahmeraums (168) der Spannvorrichtung (100) einen Höcker (282) aufweist, welcher eine Bewegung mindestens eines der Verriegelungselemente (134) längs einer Radialrichtung der Längsmittelachse (138) der Spannvorrichtung (100) nach innen begrenzt.

10. Spannvorrichtung nach einem der Ansprüche 1 bis 9, **dadurch gekennzeichnet, dass** die Spannvorrichtung (100) mindestens eine Verdrehsicherung (288) umfasst, welche eine Bewegung mindestens eines der Verriegelungselemente (134) längs einer Umfangsrichtung (196) eines Verriegelungselementeaufnahmeraums (168) der Spannvorrichtung (100) begrenzt oder verhindert.

11. Spannvorrichtung nach Anspruch 10, **dadurch gekennzeichnet, dass** die Verdrehsicherung (288) eine verriegelungselementseitige Ausnehmung (290) an einem der Verriegelungselemente (134) und/oder eine gehäuseteilseitige Ausnehmung (292) an dem Gehäuseteil (112) umfasst.

12. Spannvorrichtung nach einem der Ansprüche 10 oder 11, **dadurch gekennzeichnet, dass** die Verdrehsicherung (288) ein mit einem der Verriegelungselemente (134) und/oder mit dem Gehäuseteil (112) in Eingriff stehendes Kopplungselement (294) umfasst.

13. Spannvorrichtung nach einem der Ansprüche 10 bis 12, **dadurch gekennzeichnet, dass** die Verdrehsicherung (288) einen an dem Gehäuseteil (112) angeordneten Vorsprung umfasst.

14. Spannvorrichtung nach einem der Ansprüche 1 bis 3, **dadurch gekennzeichnet, dass** die Spannvorrichtung (100) eine Vorspanneinrichtung (300) umfasst, welche die Verriegelungselemente (134) in einer Radialrichtung der Längsmittelachse (138) der Spannvorrichtung (100) nach innen elastisch vorspannt.

## Claims

1. Clamping device for clamping a clamping bolt (126) arranged on a workpiece or on a workpiece support (124),
wherein the clamping device (100) comprises locking elements (134), a piston (132) for moving the locking elements (134) toward a longitudinal central axis (138) of the clamping device (100), and a housing part (112),
wherein in a clamping state of the clamping device (100) in which a clamping bolt (126) is locked in the clamping device (100), each of the locking elements (134) abuts against the piston (132), against the housing part (112), and against the clamping bolt (126) in each case at a contact point, wherein the respective housing contact point (222) with which each locking element (134) abuts against the housing part (112) in the clamping state extends over a two-dimensional area,
**characterized in that**
the respective clamping bolt contact point (206) with which each locking element (134) abuts against the clamping bolt (126) in the clamping state is linear.

2. Clamping device in accordance with Claim 1, **characterized in that** the respective piston contact point (214) with which each locking element (134) abuts against the piston (132) in the clamping state is linear.

3. Clamping device in accordance with Claim 1, **characterized in that** the respective piston contact point (214) with which each locking element (134) abuts against the piston (132) in the clamping state extends over a two-dimensional area.

4. Clamping device in accordance with any one of Claims 1 to 3, **characterized in that** the housing part (112) against which each locking element (134) abuts with a respective housing part contact point (222) in the clamping state is a housing cover (114) of the clamping device (100).

5. Clamping device in accordance with any one of Claims 1 to 4, **characterized in that** each of the locking elements (134) is configured as a torus segment.

6. Clamping device in accordance with any one of Claims 1 to 5, **characterized in that** the locking elements (134) are accommodated in a locking element receiving space (168) of the clamping device (100) and are movable along a peripheral direction of the locking element receiving space (168).

7. Clamping device in accordance with any one of Claims 1 to 6, **characterized in that** each of the locking elements (134) has an outer peripheral surface (264), which comprises a conical portion (276).

8. Clamping device in accordance with Claim 7, **characterized in that** the conical portion (276) of the outer peripheral surface (264) of the respective locking element (134) is inclined relative to the longitudinal central axis (138) of the clamping device (100) by an angle (α) of less than 10°.

9. Clamping device in accordance with any one of Claims 1 to 8, **characterized in that** a base (280) of a locking element receiving space (168) of the clamping device (100) has a hump (282), which delimits a movement of at least one of the locking elements (134) along a radial direction of the longitudinal central axis (138) of the clamping device (100) toward the inside.

10. Clamping device in accordance with any one of Claims 1 to 9, **characterized in that** the clamping device (100) comprises at least one anti-rotation means (288), which delimits or prevents a movement of at least one of the locking elements (134) along a peripheral direction (196) of a locking element receiving space (168) of the clamping device (100).

11. Clamping device in accordance with Claim 10, **characterized in that** the anti-rotation means (288) comprises a locking element-side recess (290) on one of the locking elements (134) and/or a housing part-side recess (292) on the housing part (112).

12. Clamping device in accordance with either of Claims 10 or 11, **characterized in that** the anti-rotation means (288) comprises a coupling element (294) in engagement with one of the locking elements (134) and/or with the housing part (112).

13. Clamping device in accordance with any one of Claims 10 to 12, **characterized in that** the anti-rotation means (288) comprises a projection arranged on the housing part (112).

14. Clamping device in accordance with any one of Claims 1 to 3, **characterized in that** the clamping device (100) comprises a biasing means (300), which elastically biases the locking elements (134) in a radial direction of the longitudinal central axis (138) of the clamping device (100) toward the inside.

## Revendications

1. Dispositif de serrage pour serrer un boulon de serrage (126) disposé sur une pièce à usiner ou sur un support de pièce à usiner (124), dans lequel le dispositif de serrage (100) comprend des éléments de verrouillage (134), un piston (132) pour déplacer les éléments de verrouillage (134) vers un axe médian longitudinal (138) du dispositif de serrage (100) et une partie de boîtier (112),
dans lequel, dans un état de serrage du dispositif de serrage (100), dans lequel un boulon de serrage (126) est verrouillé dans le dispositif de serrage (100), chacun des éléments de verrouillage (134) repose sur le piston (132), sur la partie de boîtier (112) et sur le boulon de serrage (126) respectivement sur un point de contact, dans lequel le point de contact de boîtier respectif (222), avec lequel chaque élément de verrouillage (134) repose sur la partie de boîtier (112) dans l'état de serrage, est surfacique,
**caractérisé en ce**
**que** le point de contact de boulon de serrage (206) respectif, avec lequel chaque élément de verrouillage (134) repose sur le boulon de serrage (126) dans l'état de serrage, est linéaire.

2. Dispositif de serrage selon la revendication 1, **caractérisé en ce que** le point de contact de piston (214) respectif, avec lequel chaque élément de verrouillage (134) repose sur le piston (132), dans l'état de serrage, est linéaire.

3. Dispositif de serrage selon la revendication 1, **caractérisé en ce que** le point de contact de piston (214) respectif, avec lequel chaque élément de verrouillage (134) repose sur le piston (132), dans l'état de serrage, est surfacique.

4. Dispositif de serrage selon l'une quelconque des revendications 1 à 3, **caractérisé en ce que** la partie de boîtier (112), sur laquelle chaque élément de verrouillage (134) repose dans l'état de serrage avec un point de contact de partie de boîtier (222) respectif, est un couvercle de boîtier (114) du dispositif de serrage (100).

5. Dispositif de serrage selon l'une quelconque des revendications 1 à 4, **caractérisé en ce que** chacun des éléments de verrouillage (134) est réalisé en tant que segment torique.

6. Dispositif de serrage selon l'une quelconque des revendications 1 à 5, **caractérisé en ce que** les éléments de verrouillage (134) sont logés dans un espace de réception d'éléments de verrouillage (168) du dispositif de serrage (100) et sont mobiles le long d'une direction périphérique de l'espace de réception d'élément de verrouillage (168).

7. Dispositif de serrage selon l'une quelconque des revendications 1 à 6, **caractérisé en ce que** chacun des éléments de verrouillage (134) présente une surface périphérique extérieure (264), qui comprend une section conique (276).

8. Dispositif de serrage selon la revendication 7, **caractérisé en ce que** la section conique (276) de la surface périphérique extérieure (264) de l'élément de verrouillage respectif (134) est inclinée par rapport à l'axe médian longitudinal (138) du dispositif de serrage (100) d'un angle (α) inférieur à 10°.

9. Dispositif de serrage selon l'une quelconque des revendications 1 à 8, **caractérisé en ce qu'**un fond (280) d'un espace de réception d'élément de verrouillage (168) du dispositif de serrage (100) présente une bosse (282) qui limite vers l'intérieur un mouvement d'au moins un des éléments de verrouillage (134) le long d'une direction radiale de l'axe médian longitudinal (138) du dispositif de serrage (100).

10. Dispositif de serrage selon l'une quelconque des revendications 1 à 9, **caractérisé en ce que** le dispositif de serrage (100) comprend au moins un dispositif de blocage antirotation (288), qui limite ou empêche un mouvement d'au moins un des éléments de verrouillage (134) le long d'une direction périphérique (196) d'un espace de réception d'élément de verrouillage (168) du dispositif de serrage (100).

11. Dispositif de serrage selon la revendication 10, **caractérisé en ce que** le dispositif de blocage antirotation (288) comprend un évidement (290) côté élément de verrouillage sur l'un des éléments de verrouillage (134) et/ou un évidement (292) côté partie de boîtier sur la partie de boîtier (112).

12. Dispositif de serrage selon l'une quelconque des revendications 10 ou 11, **caractérisé en ce que** le dispositif de blocage antirotation (288) comprend un élément de couplage (294) en prise avec l'un des éléments de verrouillage (134) et/ou avec la partie de boîtier (112).

13. Dispositif de serrage selon l'une quelconque des revendications 10 à 12, **caractérisé en ce que** le dispositif de blocage antirotation (288) comprend une saillie disposée sur la partie de boîtier (112).

14. Dispositif de serrage selon l'une quelconque des revendications 1 à 3, **caractérisé en ce que** le dispositif de serrage (100) comprend un dispositif de précontrainte (300) qui précontraint élastiquement vers l'intérieur les éléments de verrouillage (134) dans une direction radiale de l'axe médian longitudinal (138) du dispositif de serrage (100).
